# EUROPEAN PATENT APPLICATION

(11) **EP 2 523 126 A2**
(43) Date of publication of application: **14.11.2012**
(21) Application number: 12164283.9
(22) Date of filing: 16.04.2012
(51) Int. Cl.: G06F 17/30

(54) **Information processing apparatus, information processing method, program, and information processing system**

(30) Priority: 10.05.2011 JP 2011105034
(71) Applicant: Sony Corporation, Tokyo 108-0075 (JP)
(72) Inventor: Kobayashi, Kenichiro, Minato-ku, Tokyo 108-0075 (JP); Hoshino, Masaaki, Minato-ku, Tokyo 108-0075 (JP)
(74) Representative: Malden, Nicholas

(57) **Abstract**

There is provided an image processing apparatus including a search condition information acquiring unit that acquires search condition information that is text information indicating search conditions for searching for search object text structured according to a case structure, a language processing unit that executes language analysis processing with respect to the search condition information, a structure extracting unit that extracts a sentence structure of the search condition information using the language analysis result of the search condition information, a search expression generating unit that generates a search expression reflecting the sentence structure of the search condition information used to search for the search object text according to the sentence structure of the search condition information, and a searching unit that searches for text matching the search conditions from the search object text according to the sentence structure of the search condition information using the generated search expression.

## Description

The present disclosure relates to an information processing apparatus, an information processing method, a program, and an information processing system.

With the development of information processing technology, a large quantity of information can be handled. For this reason, technology for managing a large quantity of information and searching for specific information among the managed information according to necessity has been studied.

For example, in various web searching servers, services allowing a user to input keywords regarding topics about which the user desires to search for information and providing information matching the keywords among managed information are realized. However, in such technology, because all of the information matching the input keywords is extracted, it is necessary that the user narrow down the extracted information using a new keyword to obtain necessary information.

In addition, technology for inputting a plurality of keywords on the basis of a logical expression, searching for information, and narrowing down extracted information has been studied. However, it is necessary that the user understand logical expressions in order to generate a search logical expression when searching for information.

In order to resolve the above problem, technology for receiving an input of a natural sentence as an information search query to search for information, analyzing the input natural sentence, and extracting information from stored document files has been studied (for example, refer to Japanese Laid-Open Patent Publication No. 2010-79915).

However, in the technology disclosed in Japanese Laid-Open Patent Publication No. 2010-79915, because all sentences similar to the input natural sentence are extracted, extracted information is not sufficiently narrowed down. For this reason, technology for narrowing down searched information while maintaining operability regarding an information search has been demanded.

According to an embodiment of the present disclosure, there is provided an information processing apparatus which includes a search condition information acquiring unit that acquires search condition information that is text information indicating search conditions for searching for search object text structured according to a case structure, a language processing unit that executes language analysis processing with respect to the search condition information, a structure extracting unit that extracts a sentence structure of the search condition information using the language analysis result of the search condition information, a search expression generating unit that generates a search expression reflecting the sentence structure of the search condition information used to search for the search object text according to the sentence structure of the search condition information, and a searching unit that searches for text matching the search conditions from the search object text according to the sentence structure of the search condition information using the generated search expression.

According to another embodiment of the present disclosure, there is provided an information processing method which includes acquiring search condition information that is text information indicating search conditions for searching for search object text structured according to a case structure, executing language analysis processing with respect to the search condition information, extracting a sentence structure of the search condition information using the language analysis result of the search condition information, generating a search expression reflecting the sentence structure of the search condition information used to search for the search object text according to the sentence structure of the search condition information, and searching for text matching the search conditions from the search object text according to the sentence structure of the search condition information using the generated search expression.

According to another embodiment of the present disclosure, there is provided a program for causing a computer to realize a search condition information acquiring function for acquiring search condition information that is text information indicating search conditions for searching for search object text structured according to a case structure, a language processing function for executing language analysis processing with respect to the search condition information, a structure extracting function for extracting a sentence structure of the search condition information using the language analysis result of the search condition information, a search expression generating function for generating a search expression reflecting the sentence structure of the search condition information used to search for the search object text according to the sentence structure of the search condition information, and a searching function for searching for text matching the search conditions among the search object text according to the sentence structure of the search condition information using the generated search expression.

According to another embodiment of the present disclosure, there is provided an information processing system which includes an information searching server that includes a search condition information acquiring unit that acquires search condition information that is text information indicating search conditions for searching for search object text structured according to a case structure, a language processing unit that executes language analysis processing with respect to the search condition information, a structure extracting unit that extracts a sentence structure of the search condition information using the language analysis result of the search condition information, a search expression generating unit that generates a search expression reflecting the sentence structure of the search condition information used to search for the search object text according to the sentence structure of the search condition information, and a searching unit that searches text matching the search conditions from the search object text according to the sentence structure of the search condition information using the generated search expression and a user operation terminal that generates the search condition information and outputs the generated search condition information to the information searching server. The information searching server outputs the search result regarding the search condition information output from the user operation terminal to the user operation terminal.

According to the embodiments of the present disclosure described above, the search condition information to be the text information indicating search conditions for searching for the search object text structured according to the case structure is acquired, the language analysis processing is executed with respect to the acquired search condition information, and the sentence structure of the search condition information is extracted using the language analysis result of the search condition information. Then, the search expression reflecting the sentence structure of the search condition information used to search for the search object text according to the sentence structure of the search condition information is generated and the text matching the search conditions is searched for among the search object text according to the sentence structure of the search condition information, using the generated search expression.

According to the embodiments of the present disclosure described above, searched information can be narrowed down while operability regarding an information search is maintained.
Further particular and preferred aspects of the present invention are set out in the accompanying independent and dependent claims. Features of the dependent claims may be combined with features of the independent claims as appropriate, and in combinations other than those explicitly set out in the claims.
The present invention will be described further, by way of example only, with reference to preferred embodiments thereof as illustrated in the accompanying drawings, in which:

FIG. 1 is a block diagram illustrating a configuration of an information processing apparatus according to a first embodiment of the present disclosure;
FIG. 2 is a block diagram illustrating an example of a configuration of a language processing unit according to the first embodiment;
FIG. 3 is a block diagram illustrating an example of a configuration of a search object data generating unit according to the first embodiment;
FIG. 4 is a diagram illustrating an example of search object text;
FIG. 5A is a diagram illustrating an example of language analysis processing according to the first embodiment;
FIG. 5B is a diagram illustrating an example of language analysis processing according to the first embodiment;
FIG. 5C is a diagram illustrating an example of language analysis processing according to the first embodiment;
FIG. 6 is a diagram illustrating sentence structuring processing according to the first embodiment;
FIG. 7 is a diagram illustrating sentence structuring processing according to the first embodiment;
FIG. 8 is a diagram illustrating sentence structural processing according to the first embodiment;
FIG. 9 is a diagram illustrating time-series fact data according to the first embodiment;
FIG. 10 is a diagram illustrating a search index according to the first embodiment;
FIG. 11 is a diagram illustrating search logical expression generation processing according to the first embodiment;
FIG. 12 is a diagram illustrating text search processing according to the first embodiment;
FIG. 13 is a diagram illustrating text search processing according to the first embodiment;
FIG. 14 is a diagram illustrating display processing of the search result according to the first embodiment;
FIG. 15 is a diagram illustrating text search processing according to the first embodiment;
FIG. 16 is a diagram illustrating text search processing according to the first embodiment;
FIG. 17 is a diagram illustrating display processing of the search result according to the first embodiment;
FIG. 18 is a diagram illustrating display processing of the search result according to the first embodiment;
FIG. 19 is a diagram illustrating display processing of the search result according to the first embodiment;
FIG. 20 is a flowchart illustrating an example of a flow of an information processing method according to the first embodiment;
FIG. 21 is a flowchart illustrating an example of a flow of an information processing method according to the first embodiment;
FIG. 22 is a flowchart illustrating an example of a flow of an information processing method according to the first embodiment;
FIG. 23 is a diagram illustrating a first modification of the information processing apparatus according to the first embodiment; and
FIG. 24 is a block diagram illustrating a hardware configuration of an information processing apparatus according to an embodiment of the present disclosure.

### DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and configuration are denoted with the same reference numerals, and repeated explanation of these structural elements is omitted.

The following explanation will be made in the order described below.
(1) First Embodiment
   (1-1) Object
   (1-2) Configuration of Information Processing Apparatus
   (1-3) Specific Example of Information Search Processing
   (1-4) Flow of Information Processing Method
   (1-5) First Modification
(2) Hardware Configuration of Information Processing Apparatus according to Embodiment of Present Disclosure
(3) Conclusion

### (First Embodiment)

In the following embodiment, search object text is mainly described as various text data regarding medical information. As the text data regarding the medical information, computerized medical care information such as an electronic medical chart, a clinical pass, and a discharge summary (discharge abstract) and a variety of computerized text data such as medical care reports from associations on a network such as the Internet are known. This medical information text includes sentences that take the form of description of facts arranged chronologically (time series), unlike general text such as novels.

However, search object text that can be searched for by an information processing apparatus and an information processing method according to an embodiment of the present disclosure is not limited to the various text data regarding medical information and text data regarding various topics may be searched.

As the various topics, topics regarding home appliances, topics regarding sports, topics regarding sightseeing, and topics regarding cooking are known. With respect to the topics where there is language code information (for example, international medical code) where a specific word or word group and unique identification information given to the word or word group are associated with each other, such as medical information and information regarding home appliances, or so-called language ontology information among the topics, text data can be appropriately searched.

### <Object>

Hereinafter, before describing an information processing apparatus and an information processing method according to the first embodiment of the present disclosure, first, an object of the embodiment of the present disclosure will be simply described.

Various techniques for searching medical information text have been suggested and put to practical use. In a medical information searching system that is put to practical use, a search is performed using a keyword and medical information such as a medical chart including the keyword can be searched. However, although the medical information that includes the keyword can be extracted when a search is performed on a keyword level, even when a name of a medicine is searched for, it is necessary that a user determine the cases in which the medicine is used from the obtained search result and narrow down the cases.

In addition, narrowed down information can be searched for by combining a plurality of keywords by a logical expression, generating a search query, and using the search query at the time of searching. However, in this case, because it is necessary that the user understand logical expressions to generate a search query, it is difficult for the user to use the above system.

The technique for searching for information using a natural sentence that is disclosed in Japanese Laid-Open Patent Publication No. 2010-79915 can be applied to searching for medical information text. However, in the technique that is disclosed in Japanese Laid-Open Patent Publication No. 2010-79915, a temporal situation or a temporal flow of the natural sentence is not considered. For this reason, medication order is not determined and it is not determined whether a case is a past case or a future case. As a result, a search is performed using a similarity degree by whether a word is included or not.

Therefore, the inventors have rigorously examined techniques for narrowing down information while maintaining convenience of operability for a user when text data such as medical information text is searched for, to solve the above problem.

As a result, the inventors have devised a technique of narrowing down information while maintaining convenience of operability for a user by considering a temporal situation or a temporal flow of a natural sentence input as an information search query, as will be described below.

### <Configuration of Information Processing Apparatus>

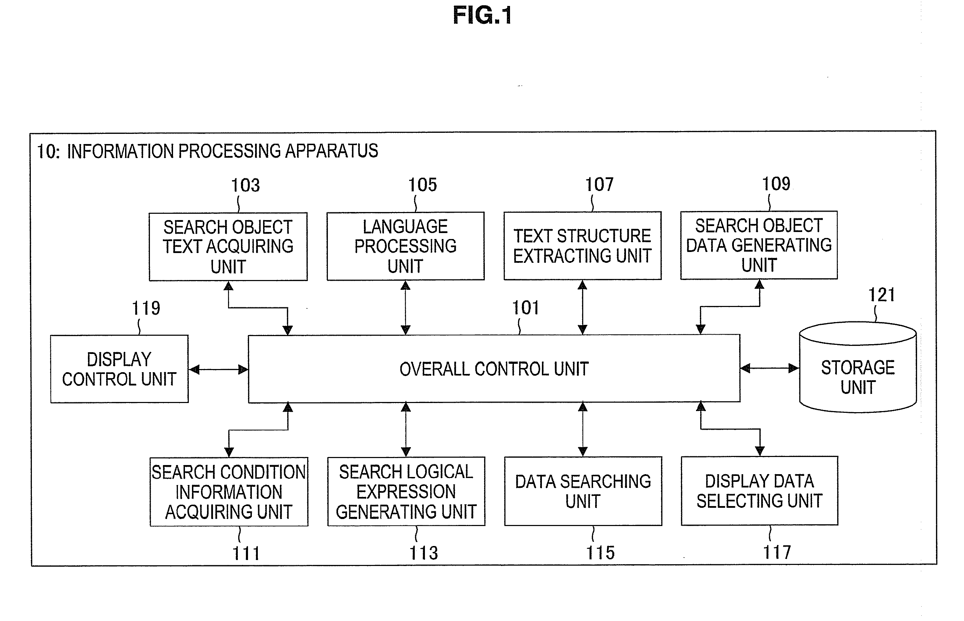

First, a configuration of an information processing apparatus according to the first embodiment of the present disclosure will be described in detail with reference to FIG. 1. FIG. 1 is a block diagram illustrating a configuration of an information processing apparatus 10 according to this embodiment.

As illustrated in FIG. 1, the information processing apparatus 10 mainly includes an overall control unit 101, a search object text acquiring unit 103, a language processing unit 105, a text structure extracting unit 107, a search object data generating unit 109, a search condition information acquiring unit 111, a search logical expression generating unit 113, a data searching unit 115, a display data selecting unit 117, a display control unit 119, and a storage unit 121.

The overall control unit 101 is realized by a central processing unit (CPU), a read only memory (ROM), a random access memory (RAM), and a communication device. The overall control unit 101 is a processing unit which performs overall control of various processing executed by the information processing apparatus 10 according to this embodiment. Various functions that are realized by the information processing apparatus 10 according to this embodiment are realized by executing the processing by various processing units illustrated in FIG. 1, under control from the overall control unit 101. The overall control unit 101 can execute the various processing and realize the various functions that are provided by the information processing apparatus 10.

The search object text acquiring unit 103 is realized by the CUP, the ROM, the RAM, and the communication device. The search object text acquiring unit 103 acquires data of text to be searched for (search object text) from a predetermined storage area of the storage device that is included in the information processing apparatus 10, apparatuses that can communicate with the information processing apparatus 10, or various recording media such as a CD, a DVD, or a Blu-ray disc. In this case, the apparatuses that can communicate with the information processing apparatus 10 may be various apparatuses that are connected to a network such as the Internet, a local network, and a home network and may be connected directly to the information processing apparatus 10 according to this embodiment through various cables or wireless communication.

Hereinafter, the various search object text acquired by the search object text acquiring unit 103 is described as text that is not structured (hereinafter referred to as non-structured text) according to a case structure.

If the search object data acquiring unit 103 acquires data of the search object text from the predetermined storage area, the various apparatuses, and the various recording media, the search object data acquiring unit 103 outputs the acquired data to the overall control unit 101. The overall control unit 101 outputs the data output from the search object text acquiring unit 103 to the language processing unit 105 to be described below and starts a series of processing for structuring the non-structured text according to the case structure.

The language processing unit 105 is realized by the CPU, the ROM, the RAM, and the communication device. The language processing unit 105 executes language analysis processing using various analysis methods, with respect to the non-structured text of which the overall control unit 101 notifies or each of sentences forming the search condition information acquired by the search condition information acquiring unit 111 to be described below. Thereby, the information processing apparatus 10 according to this embodiment can analyze the case structures of the non-structured text or each of the sentences included in the search condition information and extract other information regarding the non-structured text or each of the sentences forming the search condition information.

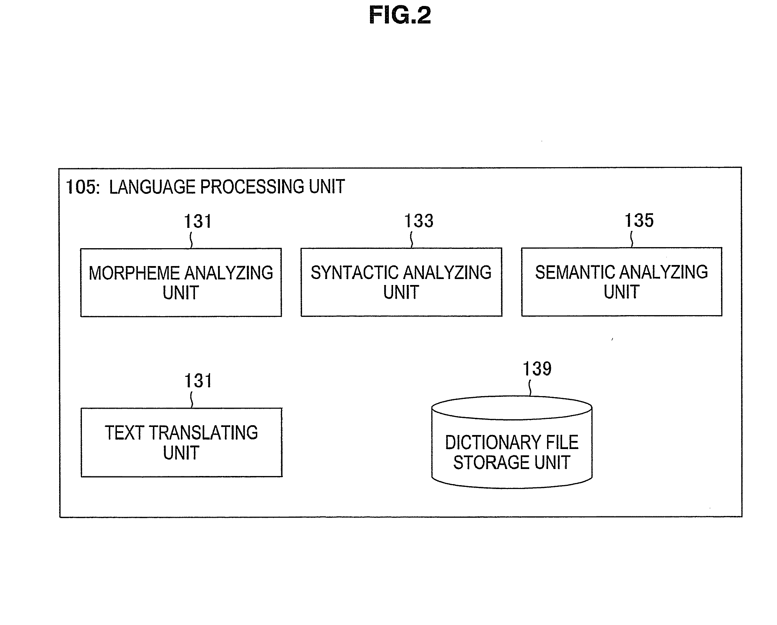

As illustrated in FIG. 2, the language processing unit 105 further includes a morpheme analyzing unit 131, a syntactic analyzing unit 133, a semantic analyzing unit 135, a text translating unit 137, and a dictionary file storage unit 139.

The morpheme analyzing unit 131 is realized by the CPU, the ROM, the RAM, and the communication device. The morpheme analyzing unit 131 is a processing unit that executes morpheme analysis with respect to the various text (that is, the non-structured text and the search condition information regarding the search conditions input by the user) of which the overall control unit 101 notifies. Thereby, the various text of which the overall control unit 101 notifies is divided into a plurality of morphemes. In this case, a morpheme is a smallest unit of meaning that is represented in an actual sentence. Parts of speech of words included in the sentences can be specified by dividing the non-structured text or the text regarding the search conditions into units of morphemes.

Various algorithms for executing the morpheme analysis have been suggested and the morpheme analyzing unit 131 can execute the morpheme analysis using an arbitrary algorithm.

If the morpheme analysis with respect to the various text ends, the morpheme analyzing unit 131 outputs information regarding the obtained analysis result (information regarding the words included in the sentences and the parts of speech of the words) to the overall control unit 101 and the syntactic analyzing unit 133 to be described below. The morpheme analyzing unit 131 may store the information regarding the obtained analysis result in the storage unit 121. Each processing unit that is included in the information processing apparatus 10 can appropriately use the information regarding the analysis result of the morpheme analysis by the morpheme analyzing unit 131.

The syntactic analyzing unit 133 is realized by the CPU, the ROM, the RAM, and the communication device. The syntactic analyzing unit 133 is a processing unit that performs syntactic analysis (parsing) with respect to the data regarding the various text of which the overall control unit 101 notifies. The syntactic analyzing unit 133 grammatically analyzes the sentences forming the various text using the information regarding the analysis result of the morpheme analysis by the morpheme analyzing unit 131 and divides the sentences into a plurality of phrases. Thereby, grammatical functions of the words included in the various text can be specified and modification relations between the words and cases can be determined.

Various algorithms for executing syntactic analysis have been suggested and the syntactic analyzing unit 133 can execute the syntactic analysis using an arbitrary algorithm.

Kinds of the cases that are determined by the syntactic analyzing unit 133 are illustrated in the following Table 1. The cases that are illustrated in the following Table 1 are exemplary and cases that are output by the algorithms used by the syntactic analyzing unit 133 can be appropriately used.

**[Table 1]**

| | |
|---|---|
| Kind of Case | Semantic Function |
| Subject (Agent) | Subject performing operation |
| Location | Location or Position in which operation is performed |
| Time | Time when operation is performed |
| Instrument | Instrument used when operation is performed |
| Object | Object of operation |
| Source | Operation starting point or initial state |
| Goal | Operation ending point or final state |
| Experiencer) | Experiencer who experiences operation |

If the syntactic analysis with respect to the sentences included in the various text of which the overall control unit 101 notifies ends, the syntactic analyzing unit 133 outputs information regarding the obtained analysis result (information indicating a correspondence relation between the cases and the words in the sentences) to the overall control unit 101 and the semantic analyzing unit 135 to be described below. The syntactic analyzing unit 133 may store the information regarding the obtained analysis result in the storage unit 121. Each processing unit that is included in the information processing apparatus 10 can appropriately use the information regarding the analysis result of the syntactic analysis by the syntactic analyzing unit 133.

The semantic analyzing unit 135 is realized by the CPU, the ROM, the RAM, and the communication device. The semantic analyzing unit 135 is a processing unit that performs semantic analysis with respect to the data regarding the various text of which the overall control unit 101 notifies. The semantic analyzing unit 135 analyzes the text of which the overall control unit 101 notifies using the information regarding the analysis result by the morpheme analyzing unit 131 and the syntactic analyzing unit 133 and specifies semantic relations between the words included in the sentences. Thereby, the semantic analyzing unit 135 can understand the concept of each of the sentences included in the various text of which the overall control unit 101 notifies and can specify modality with respect to each sentence.

In this case, the modality shows a determination or an attitude of mind of the subject with respect to contents indicated by the sentence. Examples of the modality include showing a tense, showing logic (and, or, and not), showing a hope or a command, and showing continuation, repetition, and completion of an operation.

Various algorithms for executing the semantic analysis have been suggested and the semantic analyzing unit 135 can execute the semantic analysis using an arbitrary algorithm.

If the semantic analysis with respect to the various text ends, the semantic analyzing unit 135 outputs information regarding the obtained analysis result to the overall control unit 101. The semantic analyzing unit 135 may store the information regarding the obtained analysis result in the storage unit 121.

If the information regarding the analysis result is output from each of the morpheme analyzing unit 131, the syntactic analyzing unit 133, and the semantic analyzing unit 135, the overall control unit 101 collects information regarding the obtained analysis results and outputs the information to the text structure analyzing unit 107 to be described below.

When the morpheme analyzing unit 131, the syntactic analyzing unit 133, and the semantic analyzing unit 135 analyze the various text data, the morpheme analyzing unit 131, the syntactic analyzing unit 133, and the semantic analyzing unit 135 can use various dictionary files stored in the dictionary file storage unit 139 to be described below or various dictionary files existing on a network such as the Internet.

The text translating unit 137 is realized by the CPU, the ROM, the RAM, and the communication device. The text translating unit 137 is a processing unit that converts a language used for the notation of the text into another language, with respect to at least a portion of the various text of which the overall control unit 101 notifies. A translated language of the language that is used for the notation of the text is not particularly limited. However, a global text search can be realized by setting the translated language to an official international language such as English.

Various algorithms for executing translation of text have been suggested and the text translating unit 137 can execute translation processing using an arbitrary algorithm.

When the text translating unit 137 executes the translation processing with respect to the various text data, the text translating unit 137 can use various dictionary files stored in the dictionary file storage unit 139 to be described below or various dictionary files on a network such as the Internet.

If the translation processing with respect to the text ends, the text translating unit 137 outputs information regarding the obtained translation result to the overall control unit 101. The text translating unit 137 may store the information regarding the obtained translation result in the storage unit 121.

The various dictionary files that are used when each processing unit of the language processing unit 105 executes the analysis processing or the translation processing are stored in the dictionary file storage unit 139. Examples of the dictionary may include a database regarding the morphemes, a word dictionary, and a concept dictionary. The dictionary may be used commonly by each processing unit or may be specialized to each processing unit. The dictionary may be a versatile dictionary to be used regardless of a genre of the considered text, or may be a dictionary prepared for each genre of text and be specialized to each genre.

The configuration of the language processing unit 105 that is included in the information processing apparatus 10 according to this embodiment has been described in detail with reference to FIG. 2.
Hereinafter, returning to FIG. 1, the configuration of the information processing apparatus 10 according to this embodiment will be described.

The text structure extracting unit 107 is realized by the CPU, the ROM, the RAM, and the communication device. The text structure extracting unit 107 extracts a sentence structure of the non-structured text or the search condition information using the language analysis result regarding the non-structured text or the search condition information of which the overall control unit 101 notifies. In addition, the text structure extracting unit 107 structures the non-structured text or each sentence forming the search condition information using a case structure obtained from the language analysis result and generates structured data.

In detail, the text structure extracting unit 107 associates each phrase included in the non-structured text or each sentence forming the search condition information with information indicating a function of each phrase (for example, information indicating whether each phrase is a noun phrase, a verb phrase, a predicate clause, etc.) and information indicating a case corresponding to each phrase and generates phrase information on the basis of the language analysis result. In addition, the text structure extracting unit 107 associates the generated phrase information on the basis of knowledge regarding the extracted sentence structure. By this processing, the text structure extracting unit 107 specifies a predicate structure of the non-structured text or each sentence forming the search condition information and structures each sentence.

If there is language code information matching the contents of the search object text, the text structure extracting unit 107 structures the text using the language code information, when the non-structured text or the search condition information is structured.

In this case, the language code information is an information group in which a word or a word group and unique identification information (hereinafter referred to as language code) given to the word or the word group are associated with each other. As the language code information, various databases constructed with regard to specific contents or various ontologies regarding the specific contents can be exemplified.

When there is a word or word group included in the language code information in the search object text or the sentences forming the search condition information, the text structure extracting unit 107 replaces the word or the word group and the phrase information with the language code. Thereby, fluctuation in notations can be absorbed and the same fact can be represented with the same structure without depending on language, when the language code is an international standard code. As a result, a case structure at a semantic concept level that does not depend on language can be realized and search accuracy of the search object text can be improved.

In this case, in medical-related topics considered in this embodiment, an international medical code that is represented by ICD-10 or SNOMED can be used as the language code information.

The text structure extracting unit 107 can denote a predicate structure of the search object text or the search condition information using an arbitrary system such as a logical expression to be specifically described below, a feature structure system, and a global document annotation (GDA) system.

When the text structure extracting unit 107 structures the search object text or the search condition information, the text structure extracting unit 107 may omit a modification tree (tree structure) that does not include a language code. However, when there is a modification tree including a language code in a high rank of the modification tree, only the modification structure may remain as structured data and word information may be omitted. Thereby, structuring that is specialized to the topics corresponding to the language code information can be realized.

In this case, it is preferable that a structure of the modification tree not be omitted, because the structure of the modification tree is useful for search processing with regard to the time case. However, the structure of the modification tree may be omitted, similar to other case information. The case information that may be omitted or not omitted may become a comparison object or may be excluded from the comparison object when structured data of the search condition information is compared.

The text structure extracting unit 107 may translate the denotation corresponding to the time case into an official international language (international standard language) such as English in cooperation with the language processing unit 105 and hold the notation to enable a comparison at the notation level.

If the text structure extracting unit 107 ends extracting of the sentence structure and structuring of the text and generates structured data where the predicate structure is represented, the text structure extracting unit 107 outputs the obtained structured data to the overall control unit 101.

The search object data generating unit 109 is realized by the CPU, the ROM, the RAM, and the communication device. The search object data generating unit 109 generates search object data used in the search processing of the text using the text (structured text) structured by the text structure extracting unit 107 according to the case structure.

If the overall control unit 101 notifies the search object data generating unit 109 of the structured text regarding the search object text, first, the search object data generating unit 109 provides unique identification information (hereinafter referred to as text identification information) to specify the search object text to the search object text. In addition, the search object data generating unit 109 generates time-series fact data regarding the notified search object text and generates a search index used to search the search object text managed by the information processing apparatus 10 according to this embodiment.

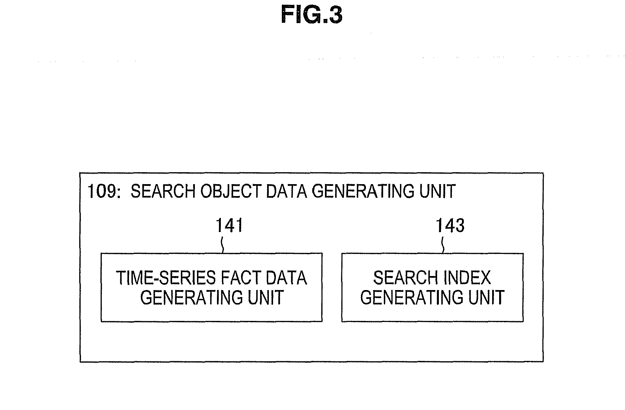

As illustrated in FIG. 3, the search object data generating unit 109 further includes a time-series fact data generating unit 141 and a search index generating unit 143.

The time-series fact data generating unit 141 is realized by the CPU, the ROM, the RAM, and the communication device. The time-series fact data generating unit 141 extracts the sentences including the language codes among the sentences forming the considered search object text on the basis of the processing result by the text structure extracting unit 107, accumulates the predicate structures corresponding to the extracted sentences in appearance order of the sentences, and generates the time-series fact data.

The time-series fact data generating unit 141 provides unique identification information (hereinafter referred to as sentence identification information) to each of the predicate structures forming the time-series fact data. Thereby, each of the sentences that are included in the time-series fact data can be specified uniquely using the text identification information and the sentence identification information.

In the information processing apparatus 10 according to this embodiment, transitions of the predicate structures in time series of the sentences forming the search object text are determined as transitions of the topics of the search object text. When phrases corresponding to time cases are included in the sentences forming the text, the transitions of the topics can be determined in consideration of the change in the time case. In the information processing apparatus 10 according to this embodiment, text based on the transitions of the topics designated as the search conditions can be easily searched for by generating the time-series fact data and using the time-series fact data in the search processing of the text.

The search index generating unit 143 is realized by the CPU, the ROM, the RAM, and the communication device. The search index generating unit 143 generates a search index used in the search processing of the text on the basis of the processing result by the text structure extracting unit 107 and the processing result by the time-series fact data generating unit 141.

The search index is generated according to the language code in the structured text and specific information to specify a sentence including the certain language code is associated with the certain language code. In this case, the text identification information and the sentence identification information of the predicate are used as the specific information to specify the sentence. That is, the search index that is generated by the search index generating unit 143 functions as content information regarding each language code that shows a description relation among each language code, each search object text, and each sentence.

If the overall control unit 101 notifies of the search index generating unit 143 of structured data of new search object text, the search index generating unit 143 adds specific information to specify a language code included in the newly notified search object text or a sentence including the language code to the existing search index. The above processing is executed and the search index regarding the search object text that is managed by the information processing apparatus 10 according to this embodiment is generated.

The search object data including the time-series fact data and the search index that are generated as described above is stored in a predetermined storage area such as the storage unit 121.

The configuration of the search object data generating unit 109 that is included in the information processing apparatus 10 according to this embodiment has been described in detail with reference to FIG. 3.
Hereinafter, returning to FIG, 1, the configuration of the information processing apparatus 10 according to this embodiment will be described.

The search condition information acquiring unit 111 is realized by the CPU, the ROM, the RAM, the input device, and the communication device. The search condition information acquiring unit 111 acquires search condition information that is text information that is input by the user using an input device such as a keyboard, a mouse, and a touch pen and shows search conditions to search for the search object text. If the search condition information acquiring unit 111 acquires the search condition information, the search condition information acquiring unit 111 outputs the acquired search condition information to the overall control unit 101. The overall control unit 101 outputs the search condition information output from the search condition information acquiring unit 111 to the search logical expression generating unit 113. Thereby, the search processing for searching for the text matching the search conditions from the search object text starts.

The search logical expression generating unit 113 that is an example of a search expression generating unit is realized by the CPU, the ROM, and the RAM. If the overall control unit 101 notifies the search logical expression generating unit 113 of the search condition information acquired by the search condition information acquiring unit 111, the search logical expression generating unit 113 requests the language processing unit 105 to execute language processing of the notified search condition information through the overall control unit 101. If the language processing unit 105 notifies the search logical expression generating unit 113 of the language analysis result of the search condition information, the search logical expression generating unit 113 requests the text structure extracting unit 107 to extract a sentence structure of the search condition information through the overall control unit 101. If the text structure extracting unit 107 notifies the search logical expression generating unit 113 of the analysis result of the sentence structure, the search logical expression generating unit 113 generates a search logical expression to search for the search object text including the sentence structure of the text included in the search condition information according to the language analysis result of the search condition information and the sentence structure of the search condition information.

In this case, processing for generating the search logical expression from the language analysis result of the search condition information and the sentence structure of the search condition information is the same as the structuring processing of the non-structured text executed by the text structure extracting unit 107. By the processing, the search logical expression generating unit 113 structures the text corresponding to the search condition information.

If the search logical expression generating unit 113 generates the search logical expression corresponding to the search condition information of which the overall control unit 101 notifies, the search logical expression generating unit 113 outputs the generated search logical expression to the overall control unit 101. The overall control unit 101 outputs the search logical expression output from the search logical expression generating unit 113 to the data searching unit 115 to be described below.

The data searching unit 115 that is an example of a searching unit is realized by the CPU, the ROM, and the RAM. The data searching unit 115 uses the search logical expression generated by the search logical expression generating unit 113 and searches the text matching the search conditions among the search object text according to the sentence structure of the search condition information. When a plurality of sentences are included in the search condition information, the data searching unit 115 determines the transitions of the predicate structures of the sentences included in the search condition information as the transitions of the topics in the search condition information and searches the text matching the search conditions among the search object text on the basis of the transitions of the topics.

The data searching unit 115 can execute the search in a structure unit of the search object text using a portion of the text corresponding to the search condition information.

Specifically, the data searching unit 115 refers to the search index generated by the search object data generating unit 109 and determines whether the language code included in the search logical expression is in the search index. When the language code included in the search logical expression is in the search index, the data searching unit 115 refers to the specific information (text identification information and sentence identification information) associated with the language code to acquire structured data (data in which a predicate structure is represented) of the corresponding sentence and accumulates the structured data as candidate data.

If the data searching unit 115 refers to the search index and extracts all candidates regarding the language code included in the search logical expression, the data searching unit 115 compares the structured data represented by the search logical expression and the candidate data and calculates costs (that is, adds weighting information) in order of data having similar sentence structures.

In this case, an all scanning algorithm, an O (ND) algorithm, and an O (NP) algorithm are known as algorithms to compare the data used by the data searching unit 115. However, known methods can be used in addition to the algorithms described above.

When the data searching unit 115 compares the data, the data searching unit 115 defines a level of a sentence structure having a direct modification relation with a predicate as a first level, defines a phrase modifying each element of the first level as a second level, and defines something modifying the second level as a third level. By sequentially executing the above processing in the same way thereafter, the data searching unit 115 layers the structured data into a plurality of hierarchies. Then, the data searching unit 115 sets a threshold value to an accordance rate for each hierarchy (level) and calculates a similarity degree of the search logical expression and the candidate data. The similarity degree shows priority of the candidate data.

Information regarding the candidate data that is searched for by the data searching unit 115 is transmitted to the display data selecting unit 117 through the overall control unit 101.

The display data selecting unit 117 that is an example of the selecting unit is realized by the CPU, the ROM, and the RAM. The display data selecting unit 117 selects the text output as the search result among the text searched by the data searching unit 115.

For example, the display data selecting unit 117 selects the text output as the search result in order of high degree of similarity (or low degree of similarity), according to the degrees of similarity of the sentence structures of the search logical expressions corresponding to the text included in the search condition information. That is, the display data selecting unit 117 searches for the text among the search object text managed by the information processing 10 according to this embodiment using the text identification information and the sentence identification information described in the candidate data, and selects the text as the search result in order of the high degree of similarity (or the low degree of similarity).

If the display data selecting unit 117 specifies a sentence similar to the search logical expression using the candidate data detected by the data searching unit 115, the display data selecting unit 117 may output a sentence appearing before the sentence similar to the search logical expression or a sentence appearing after the similar sentence as the search result. At this time, the display data selecting unit 117 may display all of the sentences or display only a predetermined portion of the corresponding sentences.

When there is a sentence designated by the user with regard to the text output as the search result, the display data selecting unit 117 may execute various statistical processing with respect to the topics included in the sentence appearing before or after the designated sentence and output the obtained statistical processing result.

Specifically, when there is a sentence designated by the user with regard to the text output as the search result, the display data selecting unit 117 specifies the sentence appearing before or after the designated sentence and outputs the specified result to the overall control unit 101. The overall control unit 101 requests the language processing unit 105 and the text structure extracting unit 107 to execute the language analysis processing and the text structure extraction processing regarding the sentence of which the display data selecting unit 117 notifies, respectively. Thereby, the sentence of which the display data selecting unit 117 notifies is structured, similar to the above case.

If the display data selecting unit 117 acquires structured data regarding the sentence appearing before or after the sentence designated by the user, the display data selecting unit 117 extracts the language code included in the structured data and executes the various statistical processing with respect to the topics corresponding to the language code.

At this time, the display data selecting unit 117 may select only the topic corresponding to the first appearing language code in the referred structured data as a statistical processing object or select the plurality of topics corresponding to the plurality of language codes included in the referred structured data as statistical processing objects.

When the display data selecting unit 117 executes the statistical processing, the display data selecting unit 117 preferably handles the language code associated with at least one of the object case and the predicate as the topic of the statistical processing object. The display data selecting unit 117 may select the language codes associated with the cases other than the predicate and the object case as the statistical processing objects or exclude the language codes from the statistical processing objects.

In the above description, the display data selecting unit 117 executes the statistical processing on the basis of a portion of the search result designated by the user. However, the display data selecting unit 117 may display the search condition information through the display control unit 119, designate the portion considered by the user from the displayed search condition information, and select the portion as the statistical processing object. The display data selecting unit 117 may execute the statistical processing on the entire search condition information input by the user as the search objects. The display data selecting unit 117 can specify the statistical processing object using an arbitrary method, in addition to the above method.

In addition, the display data selecting unit 117 can refer to various data stored by the information processing apparatus 10 and display the data corresponding to the search result. Thereby, the display data selecting unit 117 can display image data corresponding to the search result or display other text data.

The data that is selected by the display data selecting unit 117 or the data that is obtained by the statistical processing is output to the overall control unit 101 and is displayed on a display device (not illustrated in the drawings) such as a display included in the information processing apparatus 10 or a display device (not illustrated in the drawings) provided in an apparatus that can communicate with the information processing apparatus 10, under the display control from the display control unit 119 to be described below.

The display control unit 119 is realized by the CPU, the ROM, the RAM, the output device, and the communication device. The display control unit 119 performs the display control of the detection result (for example, detected text or statistical processing result) detected from the search object text.

The display control unit 119 may perform emphasis display with respect to a location having a structure similar to a structure of the search condition information in the detection result or perform emphasis display with respect to a location before or after the location having the structure similar to the structure of the search condition information in the detection result.

As the emphasis processing, processing for reversing and displaying the corresponding location or shading and displaying the corresponding location is exemplified. The emphasis processing is exemplary and other known emphasis methods may be used.

The storage unit 121 is an example of the storage device that is included in the information processing apparatus 10 according to this embodiment. The substance data or the various language code information of the search object data that is held by the information processing apparatus 10 is stored in the storage unit 121. The various information that is obtained by the processing by the language processing unit 105, the text structure extracting unit 107, the search object data generating unit 109, and the display data selecting unit 117 is stored in the storage unit 121.

Various history information such as history information regarding the search result of the search object text may be recorded in the storage unit 121. Various parameters that are necessarily stored when the information processing apparatus 10 according to this embodiment executes any processing or intermediate passages of the processing and various databases are appropriately recorded in the storage unit 121. In the storage unit 121, data can be freely written or read by each processing unit of the information processing unit 10.

The example of the function of the information processing apparatus 10 according to this embodiment has been described. The structural elements may be configured using versatile members or circuits and may be configured by hardware specialized to the functions of the structural elements. All of the functions of the structural elements may be executed by the CPU. Therefore, the used configuration can be appropriately changed according to a technology level when this embodiment is carried out.

A computer program that realizes the functions of the information processing apparatus according to this embodiment having the above-described configuration can be manufactured and can be mounted on a personal computer. A computer readable recording medium that stores the computer program can be provided. For example, the recording medium may be a magnetic disk, an optical disc, a magneto optical disc, or a flash memory. The computer program may be distributed through the network without using the recording medium.

### <Specific Example of Information Search Processing>

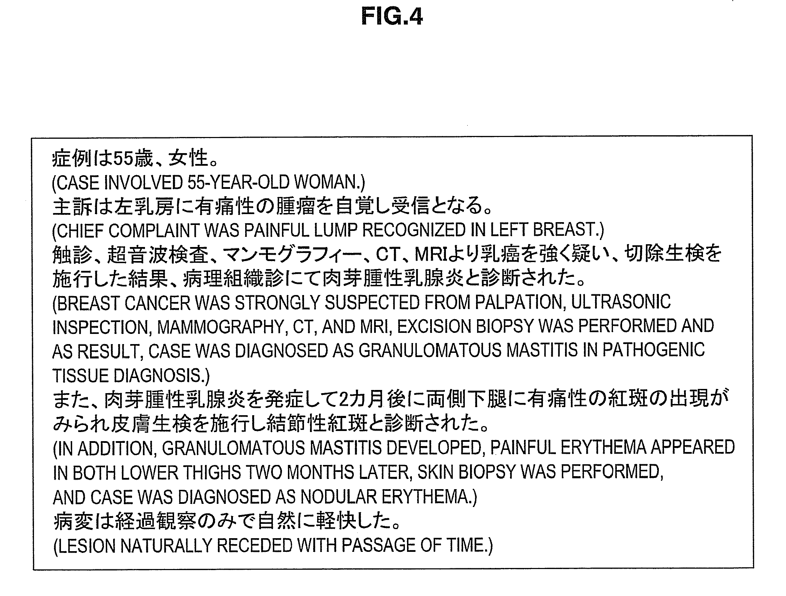

Next, information search processing that is executed by the information processing apparatus 10 according to this embodiment will be specifically described with reference to FIGS. 4 to 19.

### [Search Object Data Generation Processing]

First, search object data generation processing will be specifically described.
In the following explanation, computerized medical information that is represented by an electronic medical chart, a clinical pass, and a discharge summary and a variety of computerized text such as medical care reports from associations on the Web are considered.

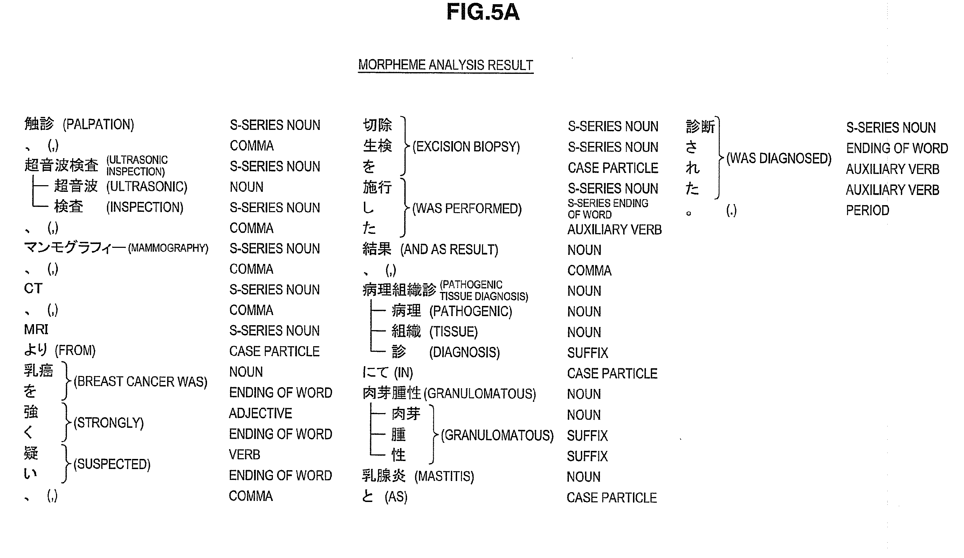

If the search object text acquiring unit 103 of the information processing apparatus 10 acquires data of the non-structured text corresponding to the medical information, the search object text acquiring unit 103 outputs the acquired data to the overall control unit 101. The overall control unit 101 outputs the data regarding the medical information output from the search object text acquiring unit 103 to the language processing unit 105. The language processing unit 105 performs the morphemic, syntactic, and semantic analyses using the medical information and generates the various analysis results. When the information processing apparatus 10 acquires the medical information illustrated in FIG. 4, the information processing apparatus 10 executes the language analysis processing with respect to each sentence forming the medical information illustrated in FIG. 4 and acquires the analysis results illustrated in FIGS. 5A to 5C.

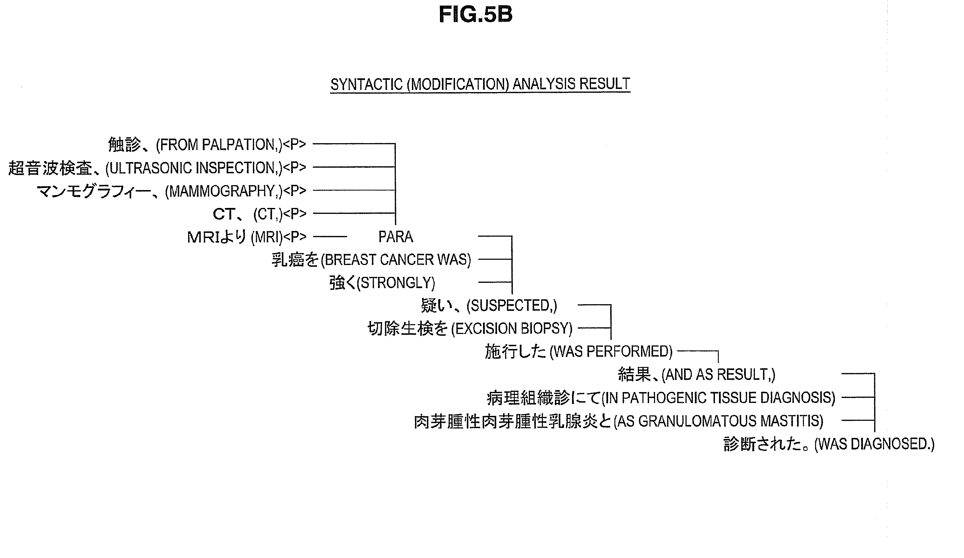

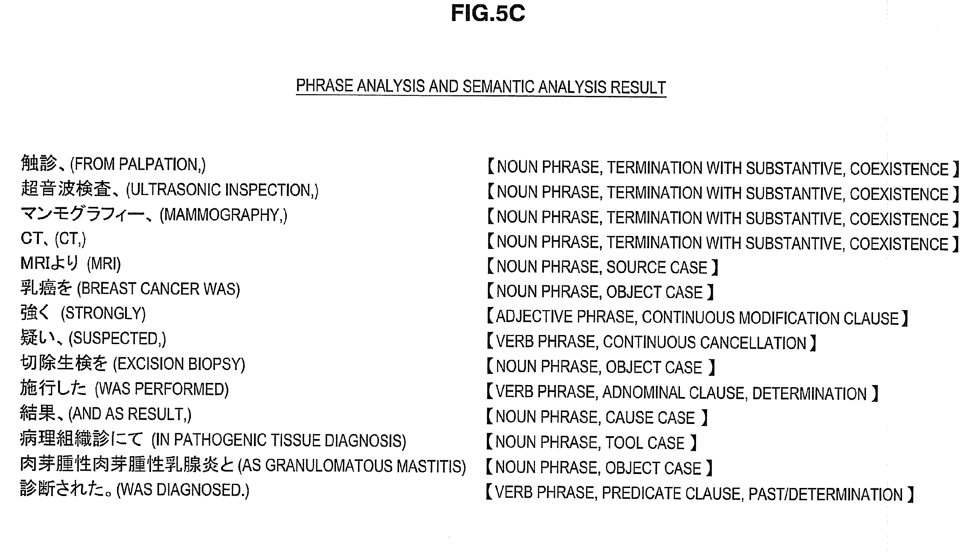

If the non-structured text illustrated in FIG. 4 is analyzed by the morpheme analyzing unit 131 of the language processing unit 105, as illustrated in FIG. 5A, each sentence is divided into morphemes and parts of speech thereof are specified. The syntactic analyzing unit 133 can obtain knowledge regarding the syntactic analysis result (that is, a modification tree) illustrated in FIG. 5B, using the analysis result by the morpheme analyzing unit 131. The semantic analyzing unit 135 performs the semantic analysis using the morpheme analysis result and the syntactic analysis result and the result illustrated in FIG. 5C is generated.

If the language processing unit 105 generates the analysis result illustrated in FIGS. 5A to 5C, the language processing unit 105 outputs the generated analysis result to the text structure extracting unit 107. The text structure extracting unit 107 structures the sentence on the basis of the analysis result. Thereby, the sentence is structured and logical expression data that is a logical expression matching the search is generated.

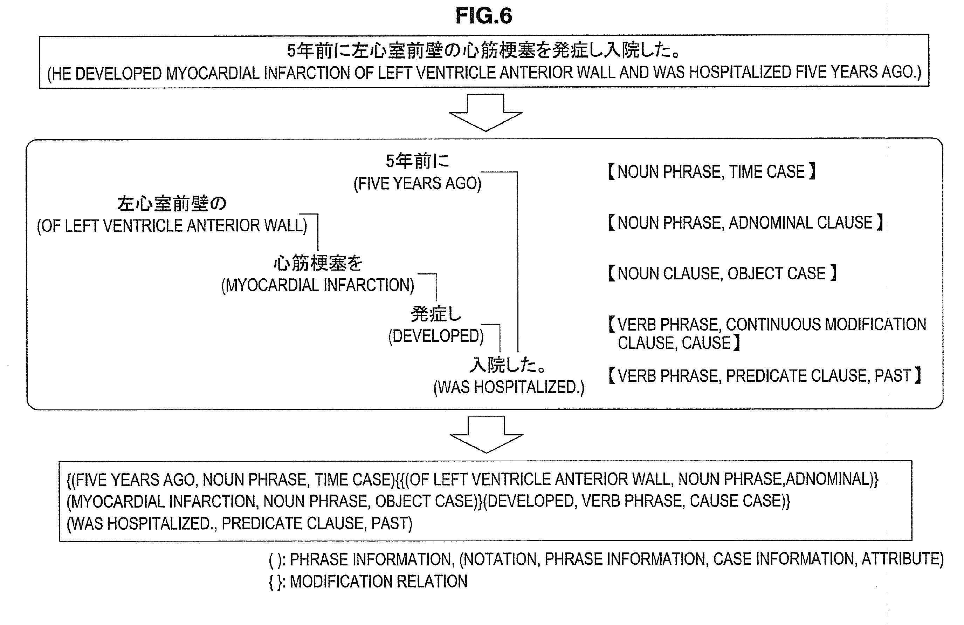

For example, there is a sentence, "He was hospitalized with a myocardial infarction of the anterior wall of his left ventricle five years ago" illustrated at an upper stage of FIG. 6 in the non-structured text. This sentence is analyzed by the language processing unit 105 and a modification tree illustrated at a middle stage of FIG. 6 and a case structure are specified. The text structure extracting unit 107 generates logical expression data illustrated at a lower stage of FIG. 6 using the knowledge. In the logical expression data illustrated at the lower stage of FIG. 6, a brackets "{}" show a modification relation of a phrase and parentheses "()" show information of the phrase. The information of the phrase includes a specific notation of the phrase, phrase information to be information regarding parts of speech of the phrase, case information showing a case of the phrase, and attributes thereof, as illustrated in FIG. 6.

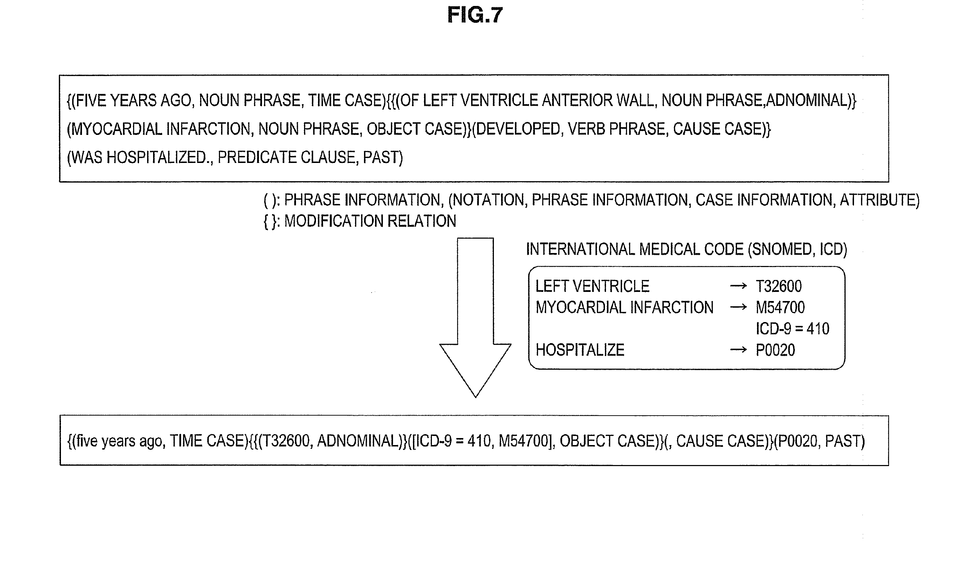

The text structure extracting unit 107 absorbs fluctuation in notation using the international medical code to be the language code information stored in the storage unit 121.
As illustrated in FIG. 7, the text structure extracting unit 107 replaces the phrase "of the anterior wall of his left ventricle" with "T32600," using a language code associated with a phrase "left ventricle" to be a higher concept of the phrase. Because information showing that the phrase "of the anterior wall of his left ventricle" is a "noun phrase" may not be preserved using the international medical code, phrase information corresponding to the corresponding portion is converted into structured data "(T32600, adnominal)
Likewise, the text structure extracting unit 107 replaces the phrase "myocardial infarction" with an identification number "[ICD - 9 = 410, M54700]" and replaces the phrase "was hospitalized" with an identification number "P0020."

As such, in the information processing apparatus 10 according to this embodiment, the fluctuation in the denotations can be absorbed using the international medical code to be the language code information and notations having the same meaning such as "admittance" and "hospitalization" can be represented by the international medical code "P0020."

The text structure extracting unit 107 may use a Japanese phrase corresponding to a time phase "five years ago" as it is in cooperation with the language processing unit 105. However, the text structure extracting unit 107 can replace the Japanese phrase with a phrase in English, which is the international standard language, such as "five years ago" and store the English phrase.

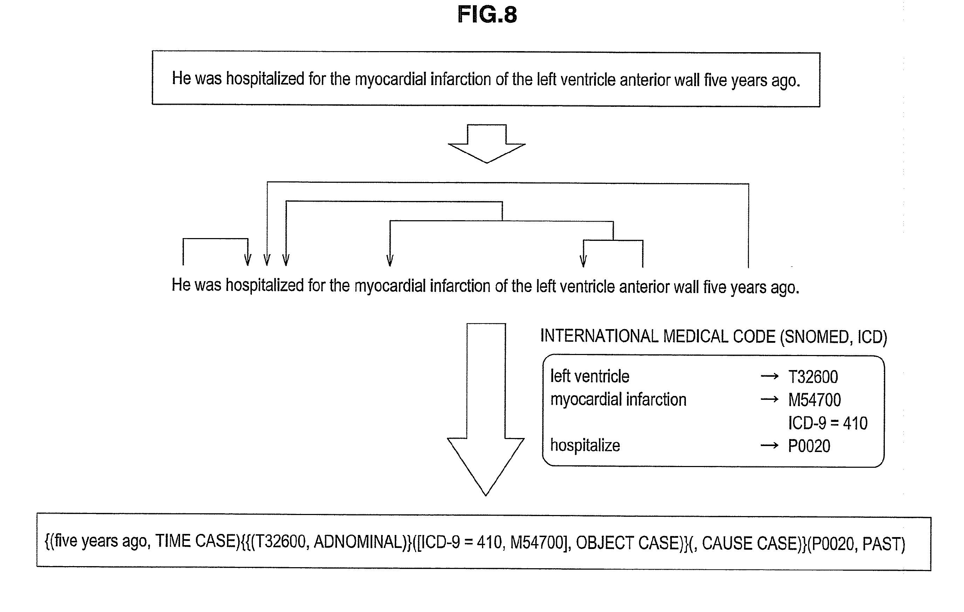

As such, because the structured data generated by the text structure extracting unit 107 on the basis of the non-structured text represents a case structure at a semantic concept level not depending on language, the same fact can be represented with the same structure without depending on language. FIG. 8 illustrates a structured example of English of the same contents as those of Japanese illustrated in FIGS. 6 and 7. However, similar to the case of Japanese, the contents can be structured.

As illustrated in FIGS. 6 and 7, when structuring is executed using the international medical code, a modification tree that does not include the international medical code can be omitted. A portion of "(, cause case)" in FIG. 7 corresponds to the corresponding portion and a higher modification structure is connected to a predicate as the cause case.

The structuring processing is executed for each sentence and structured data where a predicate structure illustrated in FIG. 7 is represented is generated with respect to each sentence.

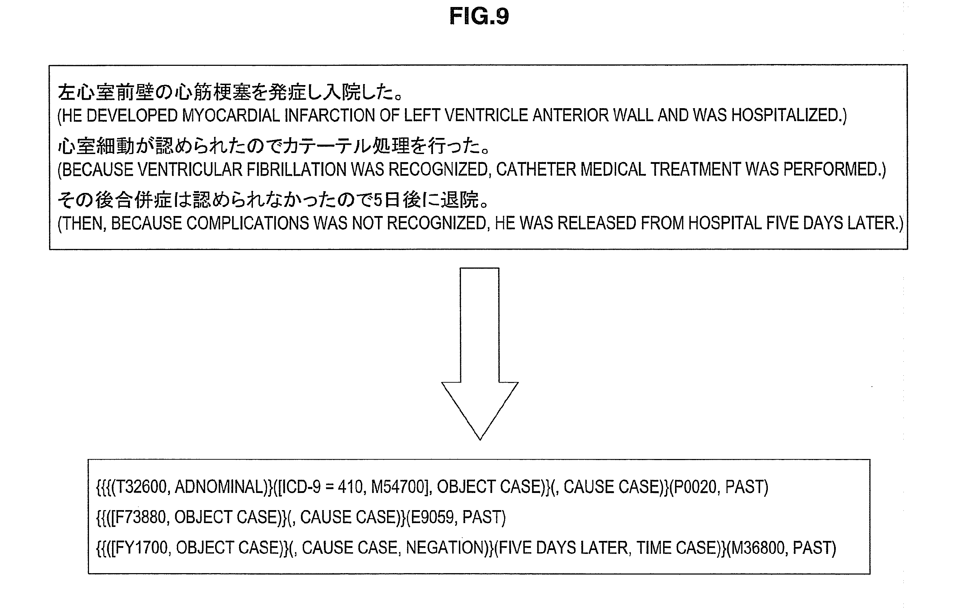

Next, the time-series fact data generating unit 141 of the search object data generating unit 109 arranges and accumulates data including the international medical code in the generated structured data in appearance order of the sentences and generates time-series fact data. For example, as illustrated at an upper stage of FIG. 9, when there are three sentences including the international medical codes, the time-series fact data generating unit 141 sequentially accumulates the structured data where the predicate structure corresponding to each sentence is represented and generates times-series fact data illustrated at a lower stage of FIG. 9.

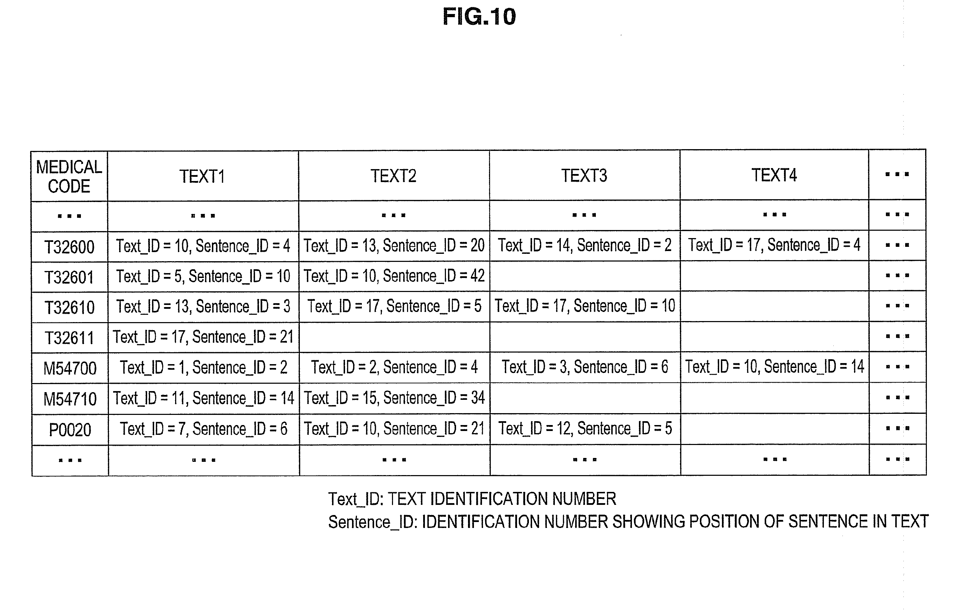

The search index generating unit 143 refers to the structured data generated by the text structure extracting unit 107 and extracts the structured data including the international medical data. Then, the search index generating unit 143 adds specific information to specify the structured data including the international medical code to a column corresponding to the international medical data included in the extracted structured data in the search index. For example, when the internal medical code "T32600" is included in the structured data corresponding to "Text_ID = 17, Sentence_ID = 4," the search index generating unit 143 newly associates "Text_ID = 17, Sentence_ID = 4" as specific information with the international medical code "T32600" of the search index. The same processing is executed with all of the search object text and a search index regarding the search object text managed by the information processing apparatus 10 that is illustrated in FIG. 10 is generated.

By the processing described above, preparation for data that is used when the search object text is searched is completed.

The above processing may be executed online or offline. The data that is used as the search object text can be accumulated by cloning from data on an existing electronic medical chart system or the Web.

### [Search Processing by Natural Sentence Input]

Next, utilization of the search object data that is generated by the processing described above will be specifically described.
First, search processing by a natural sentence input that is a first utilization method will be specifically described.

If the search condition information is input by the user of the information processing apparatus 10 using an input device such as a keyboard, a mouse, or a touch pad, the search condition information acquiring unit 111 acquires the input search condition information and outputs the search condition information to the overall control unit 101. The search condition information may be a general keyword or one more natural sentences.

If the search condition information acquiring unit 111 notifies the overall control unit 101 of the search condition information, the overall control unit 101 outputs the search condition information to the search logical expression generating unit 113. The search logical expression generating unit 113 requests the language processing unit 105 and the text structure extracting unit 107 to execute the language processing and the structure extraction processing with respect to the search condition information of which the overall control unit 101 notifies, respectively. Then, the search logical expression generating unit 113 generates a search logical expression that is a structured search condition sentence used in the search processing on the basis of the processing results by the language processing unit 105 and the text structure extracting unit 107.

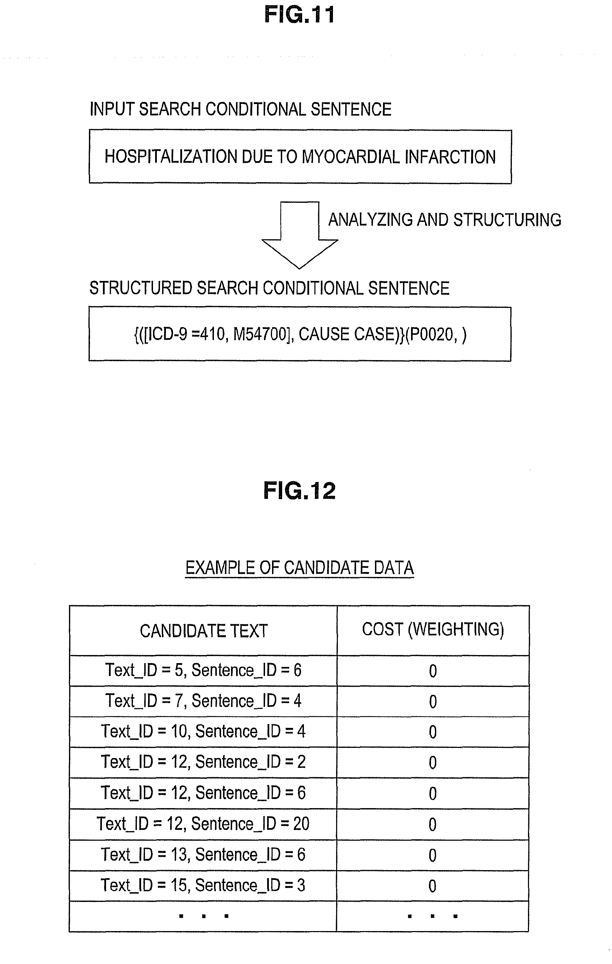

For example, when the text "hospitalization due to myocardial infarction" illustrated in FIG. 11 is input as the search condition information, the search logical expression generating unit 113 generates a search logical expression illustrated at a lower stage of FIG. 11 using the processing results by the language processing unit 105 and the text structure extracting unit 107.

If the search logical expression generating unit 113 generates the search logical expression, the search logical expression generating unit 113 outputs the generated search logical expression to the overall control unit 101. The overall control unit 101 outputs the acquired search logical expression to the data searching unit 11 and requests the data searching unit 115 to start the data search processing.

The data searching unit 115 searches a search index stored in the storage unit 121 on the basis of the international medical code included in the search logical expression included in FIG. 11, acquires structured data of an object sentence, and accumulates the structured data as candidate data as illustrated in FIG. 12. If the data searching unit 115 refers to the search index stored in the storage unit 121 and extracts all candidates, the data searching unit 115 compares the search logical expression and the structured data stored as the candidate data and performs weighting in order of data having similar sentence structures.

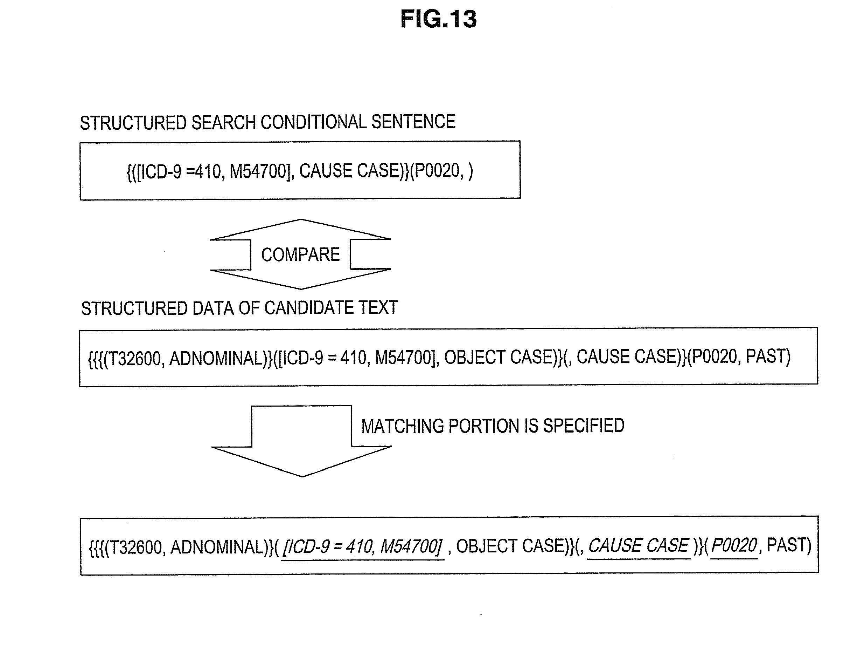

FIG. 13 illustrates a comparison example of the search logical expression and the candidate data using the O (ND) algorithm. In the case of the example illustrated in FIG. 13, it can be seen that an international medical code "[ICD - 9 = 410, M54700]," phrase information "(, cause case)," and an international medical code "P0020" match one another. The data searching unit 115 performs layering to define a level having a direct modification relation with a predicate (that is, phrase information "(P0020, past)") as first level, define a phrase modifying each element of the first level as a second level, and define something modifying the second level as a third level. In addition, a threshold value is set to an accordance rate at each level and a similarity degree is verified and used as a weighting score.

The data searching unit 115 outputs the candidate data on which the weighting (in other words, prioritization) is performed as described above, to the display data selecting unit 117 through the overall control unit 101.

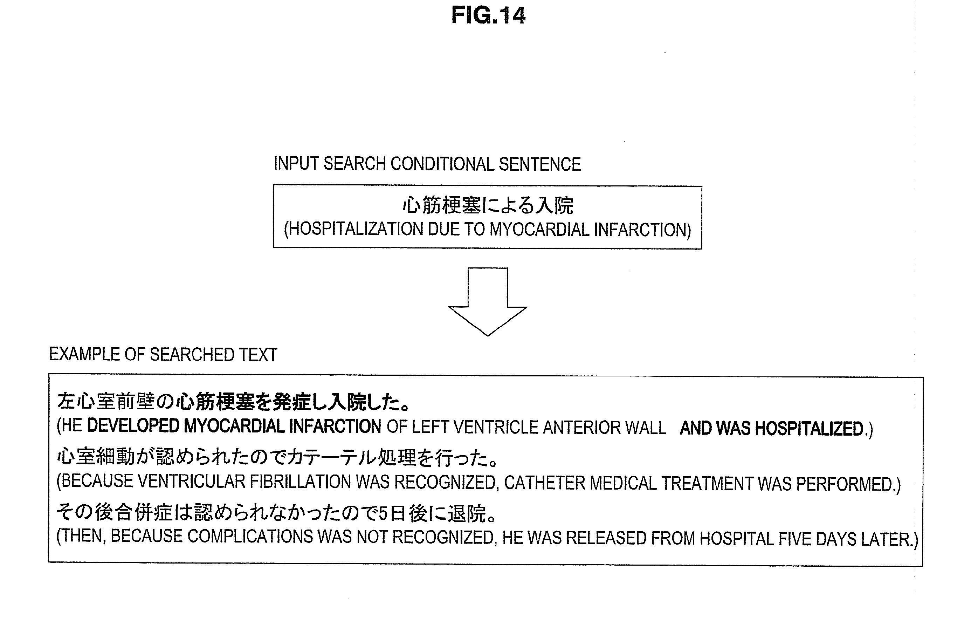

The display data selecting unit 117 searches for the text from the medical information text in order of the candidate data having high priority among the candidate data, on the basis of IDs of the text and IDs of the sentences, and outputs the text to the display control unit 119. When the display control unit 119 displays the text selected by the display data selecting unit 117, as illustrated in FIG. 14, the display control unit 119 executes emphasis processing such as shading, color changing, and emboldening with respect to a location corresponding to the search condition information input by the user and displays the search result to clarify a matching portion.

By executing the processing according to the above flow, the text information search by the natural sentence input can be realized. In the above example, the data is displayed in order of the data having high priority. However, the data may be displayed in order of the data having low priority.

In an information searching method according to this embodiment, transitions of predicate structures of sentences forming search object text are regarded as transitions of topics and search processing is executed in consideration of the transitions of the topics. For this reason, in the information searching method according to this embodiment, search object text that includes five sentences having a configuration of "sentence A → sentence B → sentence C → sentence D → sentence E" and search object text that includes five sentences having a configuration of "sentence A → sentence B → sentence D → sentence C → sentence E" are recognized as different search object text. Likewise, in the information searching method according to this embodiment, search object text that includes five sentences having a configuration of "sentence A → sentence B → sentence C → sentence D → sentence E" and search object text that includes seven sentences having a configuration of "sentence A → sentence B → sentence B' → sentence C → sentence C' → sentence D → sentence E" are recognized as different search object text. For this reason, in the information searching method according to this embodiment, narrowing down of information can be realized, regardless of whether the information search by the natural sentence is enabled.

### [Search Processing of Similar Case]

The information searching method according to this embodiment can realize the text search by the natural sentence that in which the information can be narrowed down by the search by the natural sentence as described above. In the information processing apparatus according to this embodiment, a plurality of sentences can be set as the search condition information.

Therefore, a plurality of sentences that show passage of a considered case are input as the search condition information. In the information searching method according to this embodiment, because the information search having considered the transitions of the predicate structures of the sentences is performed as described above, a search of a case where the same passage as the search condition information is discovered (that is, a search of a similar case) can be realized.

In this case, in the same way as the "search processing by the natural sentence," the information processing apparatus 10 according to this embodiment generates a search logical expression with respect to each of a plurality of sentences included in the search condition information and generates candidate data. Then, in the same way as the "search processing by the natural sentence," the prioritization is performed and data is displayed in order of the data having high priority.

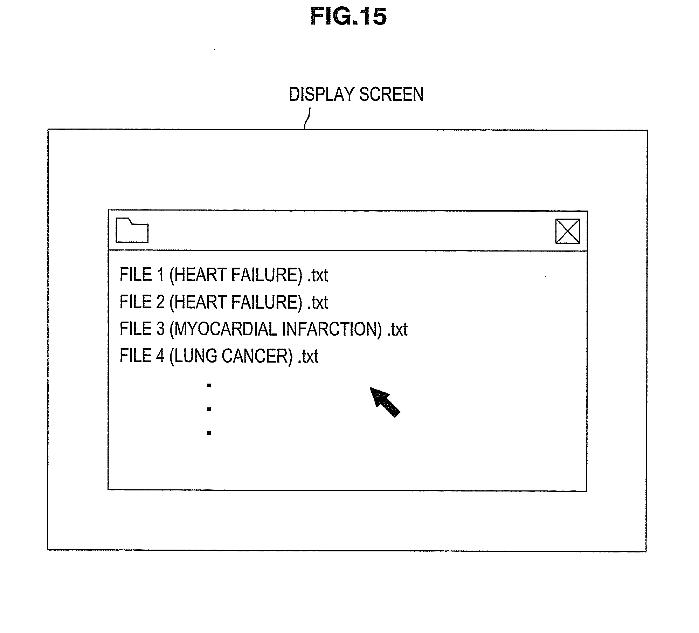

The search processing of the similar case can be executed with respect to text (for example, text on the Web) displayed on a display screen of the information processing apparatus 10, and as illustrated in FIG. 15, the search processing of the similar case can be executed with respect to data stored in storage devices of the information processing apparatus 10 or various apparatuses on the network. In this case, as illustrated in FIG. 15, the search object text can be designated by designating directories or files.

### [Passage Prediction Processing]

Passage prediction of a case or a search for a medical treatment method can be executed using the information searching method according to this embodiment.

As described above, the search for the similar case can be realized using the information searching method according to this embodiment. In this case, the user of the information processing apparatus 10 can designate a portion of arbitrary medical information text information displayed on the display screen, search for medical treatment methods of other similar cases after a designated point with regard to the cases similar to the previous case, and the medical treatment methods can be provided.

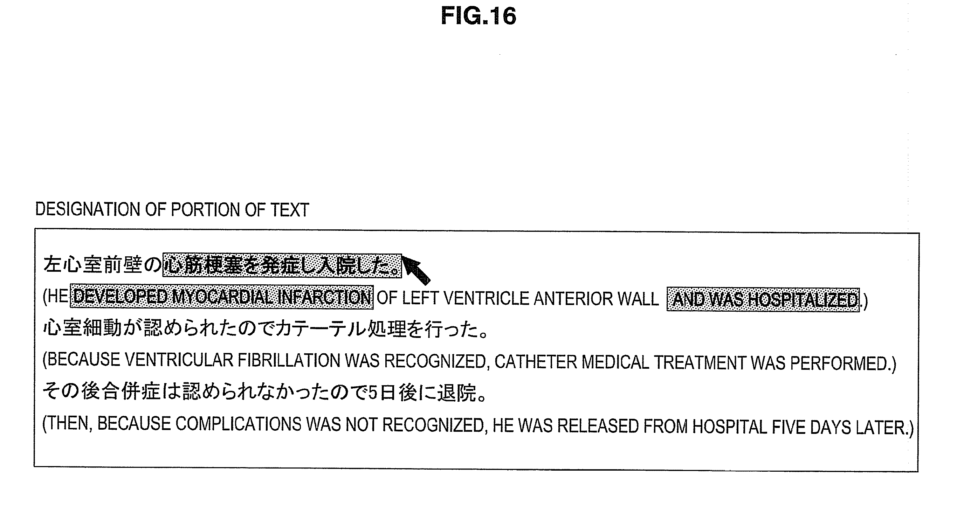

For example, if the user designates a portion of the text displayed as illustrated in FIG. 16 using an input device such as a mouse, the search condition information acquiring unit 111 partially selects a sentence included in an area designated by the user and uses the portion as the search condition information. At this time, the search condition information acquiring unit 111 may select only the designated sentence (point) or may select the sentences before or after the designated sentence. The selected sentence is analyzed in the same way as the example described above and is converted into structured data (that is, a search logical expression). In the example illustrated in FIG. 16, a passage "He was hospitalized with a myocardial infarction," is selected and used as the search condition information.

Then, in the same way as the example described above, the search logical expression is generated on the basis of the search condition information, the candidate data is generated using the generated search logical expression, and the search result is displayed. In the case of the present application example, a point similar to the search condition information is displayed as the search result and a sentence appearing after the similar case is displayed. Thereby, contents "the following medical treatments described in the searched medical information text" can be provided to the user.

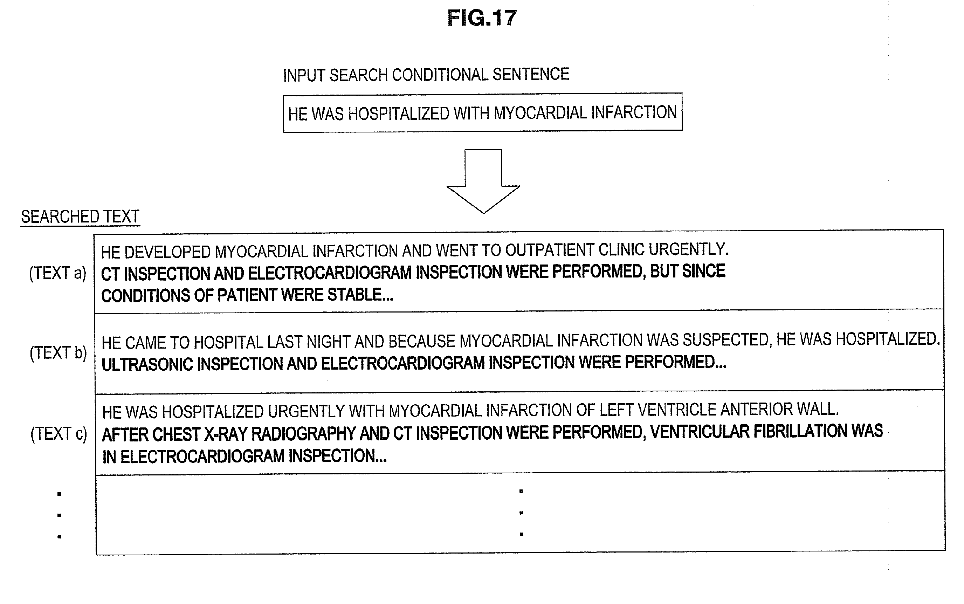

For example, as illustrated in FIG. 17, a sentence starting from the medical treatment appearing after the designated sentence is displayed as the search result when the sentence appearing before the sentence designated in FIG. 16 is similar. At this time, all of the displayed text is weighted using the same evaluation method as the above method and is provided to the user.

In the example illustrated in FIG. 17, the text regarding the medical treatment appearing after the designated sentence is provided, when the case of the sentence appearing before the designated sentence is similar. However, the same processing can be executed with respect to the case in which the similarity of the case of the sentence appearing after the designated sentence is verified and the record appearing before the designated sentence is searched for.

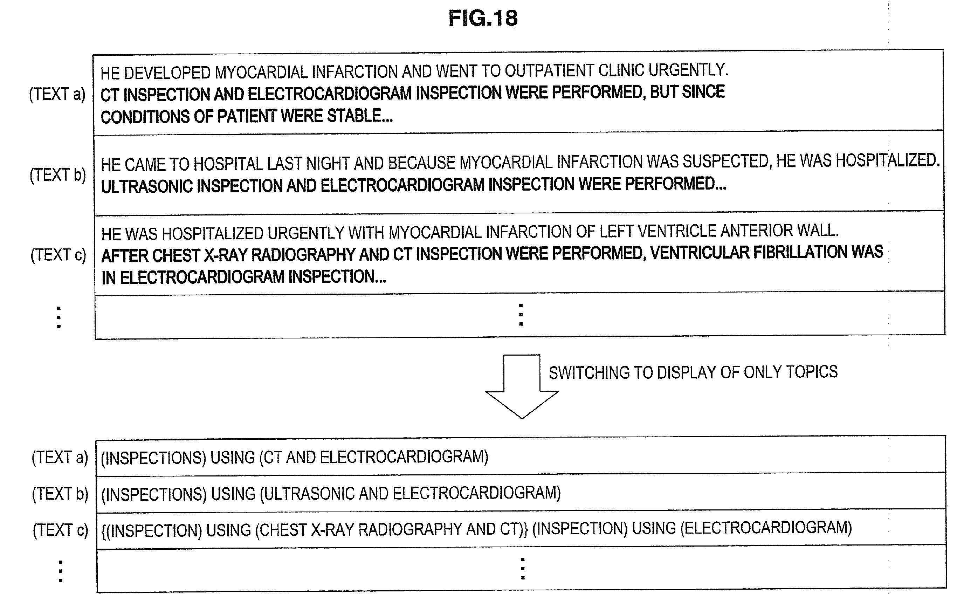

In the example illustrated in FIG. 17, the sentences of the searched medical information text are displayed. However, as illustrated in FIG. 18, the sentences are not displayed and only the medical topics (that is, performed medical treatments) can be collected and displayed. Also, both the medical topics and the source text can be provided by combining the medical topics and the sentences.

### [Prediction Analysis of Search Result]

Next, prediction analysis, which is another utilization method of the information searching method according to this embodiment, will be described. The prediction display that is the utilization method of the information searching method according to this embodiment has been described. However, with regard to other similar cases, the following medical treatments in the similar cases are displayed and statistical information of the following medical treatments can be provided.

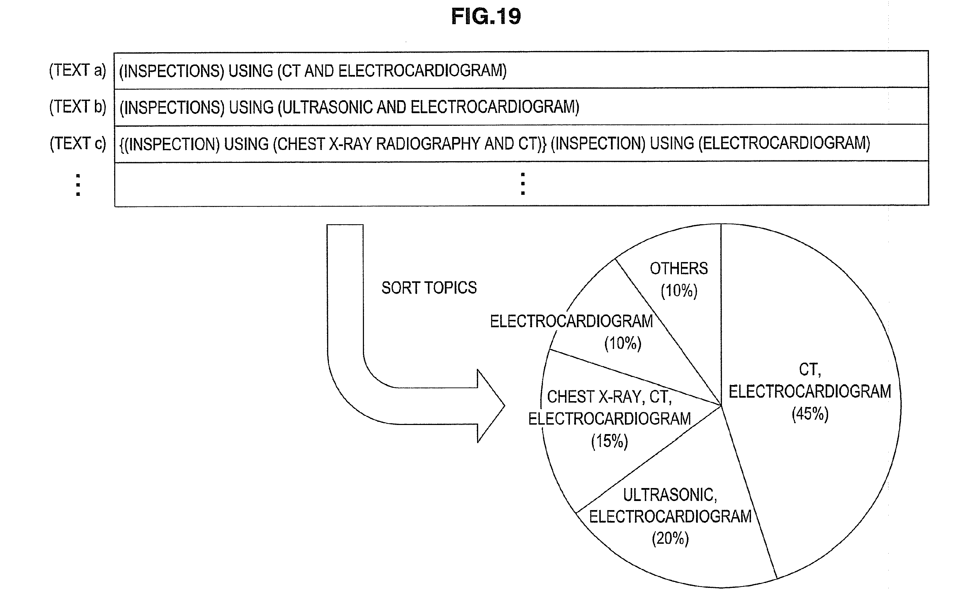

That is, when the overall control unit 101 requests the display data selecting unit 117 to perform the prediction analysis on the basis of the input from the user, the display data selecting unit 117 specifies a sentence appearing before the sentence designated by the user among the medical text designated by the precision processing function of the passage and outputs the specific result to the overall control unit 101. The specified sentence is converted into the structured data in the same way as the above case and the structured data is transmitted to the display data selecting unit 117. The display data selecting unit 117 extracts the first appearing medical topic from the transmitted structured data, obtains the statistical information, and performs sorting for each kind of the following medical treatments. An example of the medical topics that are sorted as described above is illustrated in FIG. 19.

In the example illustrated in FIG. 19, the statistical processing is executed with respect to one medical topic first appearing in the sentence after the sentence designated by the user. However, the statistical processing may be executed with respect to a plurality of medical topics.

Something that includes cases other than an object case in a predicate as the medical topic may be considered or ignored. However, something that includes the medical information in at least one of the object case and the predicate is preferably handled as the medical topic.

The prediction analysis is realized and a distribution of the medical treatments in the similar cases supported in other cases is requested and provided as useful information when students studying medical care are looking for possibilities of following medical treatments.

The specific example of the information searching method that is executed by the information processing apparatus 10 according to this embodiment has been described with reference to FIGS. 4 to 19.

### <Flow of Information Processing Method>

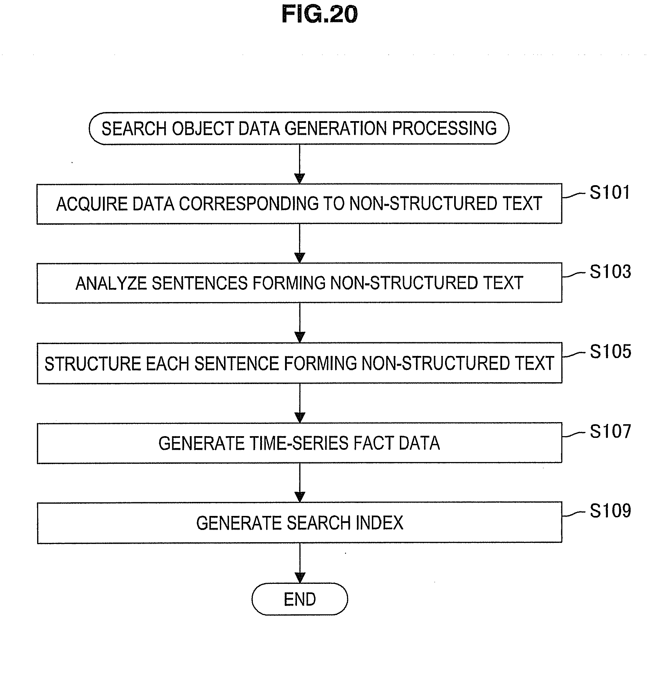

Next, a flow of the information processing method that is executed by the information processing apparatus 10 according to this embodiment will be simply described with reference to FIGS. 20 to 22.

### [Search Object Data Generation Processing]

First, an example of a flow of search object data generation processing will be simply described with reference to FIG. 20.
First, the search object text acquiring unit 103 of the information processing apparatus 10 acquires data of the non-structured text based on the search object text from a location at which the corresponding data exists (step S101) and outputs the data to the overall control unit 101.

Next, the overall control unit 101 outputs the data of the obtained non-structured text to the language processing unit 105 and the language processing unit 105 analyzes each of the sentences forming the non-structured text of which the overall control unit 101 notifies (step S103).

If the language analysis processing of the non-structured text ends, the language processing unit 105 outputs the obtained processing result to the text structure extracting unit 107 through the overall control unit 101. The text structure extracting unit 107 structures each of the sentences forming the non-structured text using the analysis result by the language processing unit 105 (step S105) and obtains the structured data.

Next, the time-series fact data generating unit 141 of the search object data generating unit 109 generates the time-series fact data using the structured data generated by the text structure extracting unit 107 (step S107). When the time-series fact data is generated, the search index generating unit 143 of the search object data generating unit 109 generates the search index (step S109). By executing the processing according to the above flow, the search object data is generated on the basis of the non-structured text.

### [Flow of Search Processing of Text]

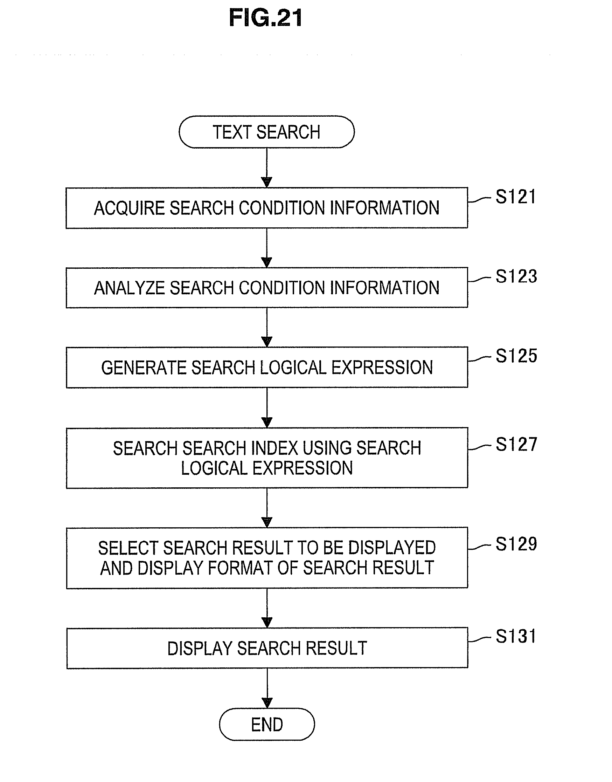

Next, an example of a flow of the search processing of the search object text will be simply described with reference to FIG. 21.
First, the search condition information acquiring unit 111 of the information processing apparatus 10 acquires the search condition information input by the user using the various input devices (step S121) and outputs the obtained search condition information to the overall control unit 101.

Next, the overall control unit 101 outputs the search condition information output from the search condition information acquiring unit 111 to the search logical expression generating unit 113. The search logical expression generating unit 113 requests the language processing unit 105 and the text structure extracting unit 107 to execute the language analysis processing of the search condition information and the extraction processing of the sentence structure, respectively. Thereby, the search condition information is analyzed (step S123).

If each of the language processing unit 105 and the text structure extracting unit 107 notifies the search logical expression generating unit 113 of the analysis result, the search logical expression generating unit 113 generates the search logical expression using the obtained analysis result (step S125). Then, the search logical expression generating unit 113 outputs the generated search logical expression to the data searching unit 115 through the overall control unit 101.

Next, the data searching unit 115 searches the search index using the search logical expression generated by the search logical expression generating unit 113 (step S127) and generates the candidate data. Then, the data searching unit 115 outputs the generated candidate data to the display data selecting unit 117 through the overall control unit 101.

Next, the display data selecting unit 117 selects the displayed search result using the candidate data output from the data searching unit 115 and selects a display format of the search result according to a user operation or an initial setting item (step S129). Then, the display data selecting unit 117 requests the display control unit 119 to display the search result. The display control unit 119 performs the display control according to the request from the display data selecting unit 117 and the search result is displayed to the user (step S131).

### [Flow of Statistical Processing of Topics]

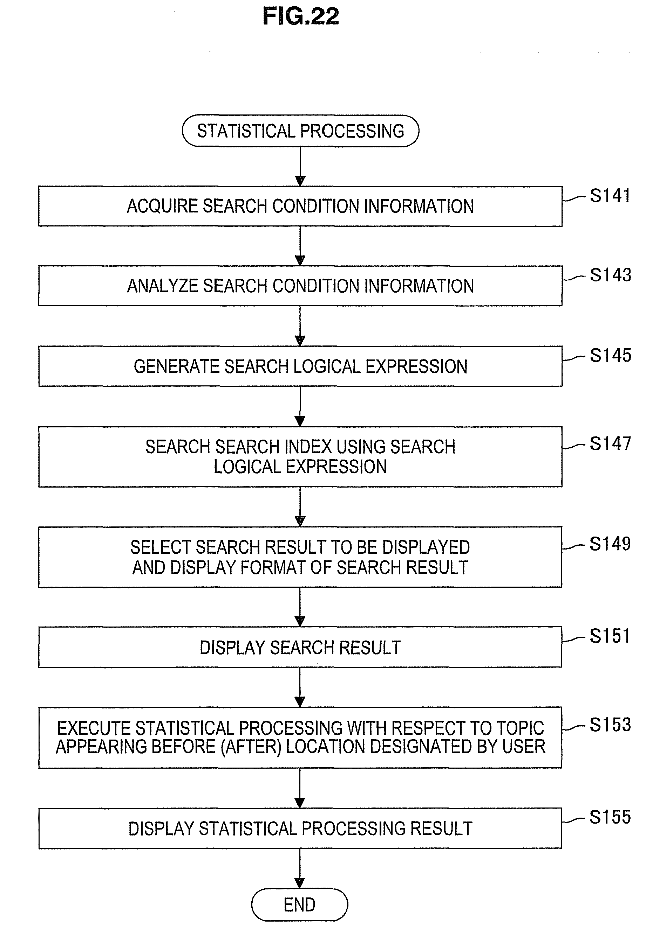

Next, an example of a flow of the statistical processing with respect to the topics included in the search result of the search object text will be simply described with reference to FIG. 22.
First, the search condition information acquiring unit 111 of the information processing apparatus 10 acquires the search condition information input by the user using the various input devices (step S141) and outputs the acquired search condition information to the overall control unit 101.

Next, the overall control unit 101 outputs the search condition information output from the search condition information acquiring unit 111 to the search logical expression generating unit 113. The search logical expression generating unit 113 requests the language processing unit 105 and the text structure extracting unit 107 to execute the language analysis processing of the search condition information and the extraction processing of the sentence structure, respectively. Thereby, the search condition information is analyzed (step S143).

If each of the language processing unit 105 and the text structure extracting unit 107 notifies the search logical expression generating unit 113 of the analysis results, the search logical expression generating unit 113 generates the search logical expression using the obtained analysis results (step S145). Then, the search logical expression generating unit 113 outputs the generated search logical expression to the data searching unit 115 through the overall control unit 101.

Next, the data searching unit 115 searches the search index using the search logical expression generated by the search logical expression generating unit 113 (step S147) and generates the candidate data. Then, the data searching unit 115 outputs the generated candidate data to the display data selecting unit 117 through the overall control unit 101.

Next, the display data selecting unit 117 selects the displayed search result using the candidate data output from the data searching unit 115 and selects a display format of the search result according to a user operation or an initial setting item (step S149). Then, the display data selecting unit 117 requests the display control unit 119 to display the search result. The display control unit 119 performs the display control according to the request from the display data selecting unit 117 and the search result is displayed with respect to the user (step S151).

Then, if a portion of the search result is designated by the user and execution of the statistical processing is requested, the display data selecting unit 117 specifies the topic before (or after) the location designated by the user using the method described above and executes the various statistical processing (step S 153). Then, the display data selecting unit 117 outputs the obtained statistical processing result to the display control unit 119 and requests the display control unit 119 to display the statistical processing result. The display control unit 119 performs the display control according to the request from the display data selecting unit 117 and the statistical processing result is displayed to the user (step S155).

In the above description, the display data selecting unit 117 executes the statistical processing on the basis of the portion of the search result designated by the user. However, as described above, the display data selecting unit 117 may execute the statistical processing with respect to the portion designated by the user among the search condition information or the entire search condition information.

The example of the flow of the information processing method according to this embodiment has been simply described with reference to FIGS. 20 to 22.

### <First Modification>

As described above, the information processing apparatus 10 according to this embodiment mainly has the three functions of the language processing function including the various analysis functions such as the morpheme analysis, the syntactic analysis, and the semantic analysis and the translation function, the search object data generating function for generating the search object data used in the search of the information using the search object text, and the information searching function for searching for the search object text on the basis of the search condition information.

The three main functions may be included in one apparatus as described above or may be distributed and included in a plurality of apparatuses (for example, various servers) on the network. A combination of processing units that are distributed to the plurality of apparatuses may be appropriately set.

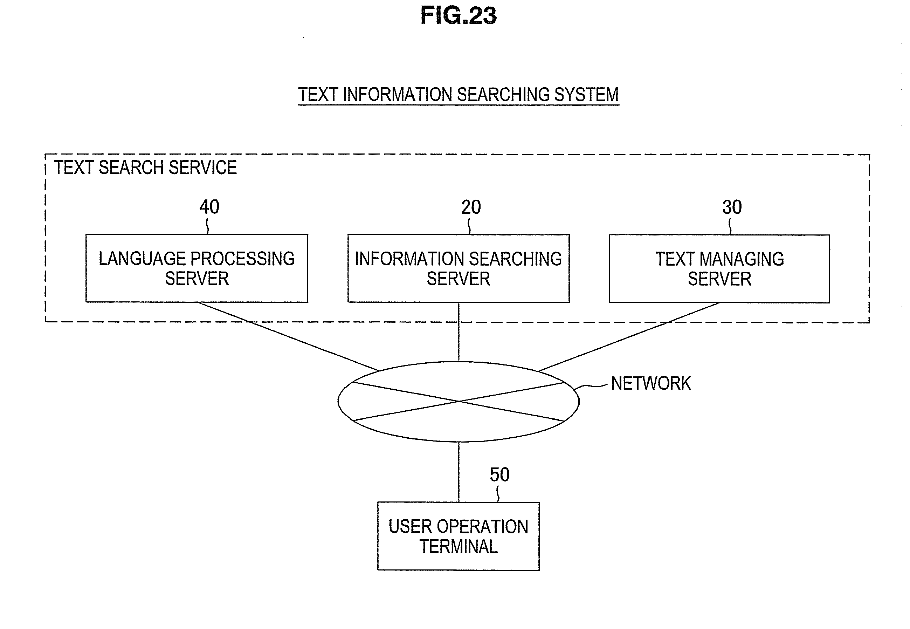

For example, the functions that are realized by the information processing apparatus 10 according to this embodiment can be distributed to three kinds of servers on the network such as the Internet and a text search service can be realized, as illustrated in FIG. 23. That is, the search object data generating function and the information searching function in the information processing apparatus 10 can be included in an information searching server 20 on the network and the information search processing described above can be realized in cooperation with a language processing function included in a language processing server 40 using structured text managed by a text managing server 30.

In this case, a user operation terminal 50 such as a personal computer, a mobile phone, a smart phone, or a portable game machine may have at least a function of acquiring the search condition information using various input devices and notifying the information searching server 20 of the search condition information and a display control function of displaying the search result output from the information searching server 20.

### (Hardware Configuration)

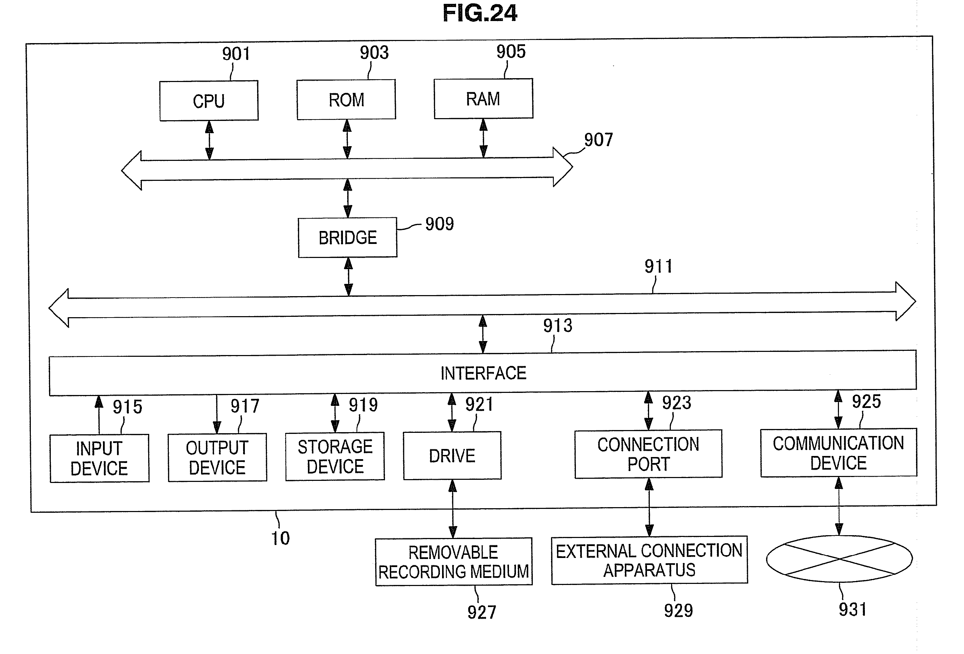

Next, a hardware configuration of an information processing apparatus 10 according to an embodiment of the present disclosure will be described in detail with reference to FIG. 24. FIG. 24 is a block diagram illustrating the hardware configuration of the information processing apparatus 10 according to the embodiment of the present disclosure.

The information processing apparatus 10 mainly includes a CPU 901, a ROM 903, and a RAM 905. The information processing apparatus 10 further includes a host bus 907, a bridge 909, an external bus 911, an interface 913, an input device 915, an output device 917, a storage device 919, a drive 921, a connection port 923, and a communication device 925.

The CPU 901 functions as an arithmetic processing device and a control device and controls all or a portion of operations in the information processing apparatus 10, according to various programs recorded in the ROM 903, the RAM 905, the storage device 919, and removable recording media 927. The ROM 903 stores programs or arithmetic parameters that are used by the CPU 901. The RAM 905 primarily stores the programs used by the CPU 901 and parameters appropriately changing in execution of the programs. These structural elements are connected mutually by the host bus 907 configured using an internal bus such as a CPU bus.

The host bus 907 is connected to the external bus 911 such as a peripheral structural element interconnect/interface (PCI) through the bridge 909.

The input device 915 is an operation unit operated by the user, such as a mouse, a keyboard, a touch panel, a button, a switch, or a lever. The input device 915 may be a remote controller unit (so-called remote controller) that uses infrared rays and other electric waves or an external connection apparatus 929 such as a mobile phone or a PDA corresponding to the operation of the information processing apparatus 10. The input device 915 is configured using an input control circuit that generates an input signal on the basis of information input by the user using the operation unit and outputs the input signal to the CPU 901. The user of the information processing apparatus 10 operates the input device 915 and can input various data to the information processing apparatus 10 or instruct the information processing apparatus 10 to execute a processing operation.

The output device 917 is configured using a device that can visually or auditorily notify the user of the acquired information. As this device, a display device such as a CRT display device, a liquid crystal display device, a plasma display device, an EL display device, or a lamp, a sound output device such as a speaker or headphones, a printer device, a mobile phone, and a facsimile machine are exemplified. The output device 917 outputs the result that is obtained by the various processing executed by the information processing apparatus 10. Specifically, the display device displays the result obtained by the various processing executed by the information processing apparatus 10 in a form of text or images. The sound output device converts an audio signal including reproduced sound data or acoustic data into an analog signal and outputs the analog signal.

The storage device 919 is a data storage device that is configured as an example of the storage unit of the information processing apparatus 10. The storage device 919 is configured using a magnetic storage device such as a hard disk drive (HDD), a semiconductor storage device, an optical storage device, or a magneto optical storage device. The storage device 919 stores programs or various data executed by the CPU 901 and various data acquired from the outside.

The drive 921 is a reader/writer for a recording medium and is embedded in the information processing apparatus 10 or is externally attached. The drive 921 reads information recorded in the mounted removable recording media 927 such as the magnetic disk, the optical disc, the magneto optical disc, or the semiconductor memory and outputs the information to the RAM 905. The drive 921 can write information to the mounted removable recording media 927 such as the magnetic disk, the optical disc, the magneto optical disc, or the semiconductor memory. The removable recording media 927 are DVD media, HD-DVD media, or Blu-ray media. The removable recording media 927 may be CompactFlash (CF) (registered trademark), a flash memory, or a secure digital (SD) memory card. The removable recording media 927 may be an integrated circuit card (IC card) mounted with a non-contact-type IC chip or an electronic apparatus.

The connection port 923 is a port that is used to directly connect an apparatus to the information processing apparatus 10. As the connection port 923, a universal serial bus (USB) port, an IEEE1394 port, and a small computer system interface (SCSI) port are exemplified. Further, as another example of the connection port 923, an RS-232C port, an optical audio terminal, or a high-definition multimedia interface (HDMI) port are exemplified. By connecting the external connection apparatus 929 to the connection port 923, the information processing apparatus 10 acquires various data directly from the external connection apparatus 929 or provides the various data to the external connection apparatus 929.

The communication device 925 is a communication interface that is configured using a communication device for connection with a communication network 931. The communication device 925 is a communication card for a wired or wireless local area network (LAN), Bluetooth (registered trademark), or wireless USB (WUSB). The communication device 925 may be a router for optical communication, a router for an asymmetric digital subscriber line (ADSL), or a modem for various communications. The communication device 925 can exchange a signal based on a predetermined protocol such as TCP/IP with other communication devices through the Internet. The communication network 931 that is connected to the communication device 925 is configured using a network connected by wire or wirelessly and may be, for example, the Internet, a home LAN, infrared communication, radio wave communication, or satellite communication.

The example of the hardware configuration that can realize the functions of the information processing apparatus 10 according to the embodiment of the present disclosure has been described. The structural elements may be configured using versatile members or hardware specialized to the functions of the structural elements. Therefore, the used hardware configuration can be appropriately changed according to a technical level when this embodiment is carried out.

### (Conclusion)

As described above, according to the information processing apparatus and the information processing method according to the embodiment of the present disclosure, by inputting the natural sentence, the high-accuracy text data search can be realized by a natural interface and the search logical expression can be extracted automatically from the natural sentence. When data similar to a medical chart or medical treatment data is searched for, a search considering time series is performed and data where the context is similar can be searched for as reliable data.

The time series can be determined using the above technology to execute the statistical processing from a large amount of similar data with respect to a time-series flow. In addition, a future predictive presentation by statistical information can be performed by detecting a turning point of transitions of events.

The preferred embodiments of the present disclosure have been described in detail with reference to the appended drawings. However, the present disclosure is not limited to the above examples. It will be apparent to those skilled in the art that various modifications and changes may be made thereto without departing from the scope and spirit of the present disclosure defined by the appended claims. Therefore, it should be understood that the various modifications can changes are included in a technical range of the present disclosure.

The present disclosure can take the following configuration.
(1) An information processing apparatus including:
   a search condition information acquiring unit that acquires search condition information that is text information indicating search conditions for searching for search object text structured according to a case structure;
   a language processing unit that executes language analysis processing with respect to the search condition information;
   a structure extracting unit that extracts a sentence structure of the search condition information using the language analysis result of the search condition information;
   a search expression generating unit that generates a search expression reflecting the sentence structure of the search condition information used to search for the search object text according to the sentence structure of the search condition information; and
   a searching unit that searches for text matching the search conditions from the search object text according to the sentence structure of the search condition information using the generated search expression.
(2) The information processing apparatus according to (1), wherein, when a plurality of sentences are included in the search condition information, the searching unit searches for text matching transitions of predicate structures from the search object text on the basis of the transitions of the predicate structures of the sentences included in the search condition information.
(3) The information processing apparatus according to (1) or (2),
   wherein, on the basis of language code information in which a word or a word group is associated with a language code to be unique identification information given to the word or the word group, the word or the word group included in the language code information among the search object text is replaced with the corresponding language code, a case of the word or the word group replaced with the language code in the search object text is associated with the language code, and the predicate structures of the search object text are denoted,
   the information processing apparatus further includes a search object data generating unit that generates search object data used in search processing of the search object text using the language code information, and
   the search object data generating unit generates times-series fact data in which the predicate structure corresponding to a sentence including the language code among sentences forming the search object text is accumulated in appearance order of the sentences and uses text identification information to be unique identification information given to the search object text and sentence identification information to be unique identification information given to the sentences forming the search object text to generate a search index in which the text identification information and the sentence identification information to specify the sentence including the language code are associated with the language code.
(4) The information processing apparatus according to (3),
   wherein the search expression generating unit replaces the word or the word group included in the language code information among the text included in the search condition information with the language code using the language code information and generates the search expression, and
   the searching unit searches the search index using the language code included in the search expression and extracts the sentence including the language code included in the search expression as candidate data.
(5) The information processing apparatus according to any one of (1) to (4), further including:
   a selecting unit that selects text output as the search result from the candidate data extracted by the searching unit,
   wherein the selecting unit selects the text output as the search result according to degrees of similarity of sentence structures of the text included in the search condition information and sentence structures of the candidate data.
(6) The information processing apparatus according to (5), wherein the selecting unit outputs sentences appearing before or after a sentence similar to the search expression among the text selected as the detection result as the search result.
(7) The information processing apparatus according to (5), wherein the selecting unit executes statistical analysis with respect to sentences appearing before or after a sentence designated by a user among the text output as the search result or the search condition information or topics corresponding to the language code in each of the sentences forming the search condition information and outputs the obtained statistical analysis result.
(8) The information processing apparatus according to (7), wherein the selecting unit executes the statistical analysis with respect to sentences in which the language code is included in an object case or a predicate among the sentences appearing before or after the sentence designated by the user or the sentences forming the search condition information.
(9) The information processing apparatus according to (3), wherein, when the information processing apparatus acquires non-structured text not structured according to a case structure, the image processing apparatus structures the non-structured text on the basis of the language processing result by the language processing unit and the sentence structure extracted by the structure extracting unit and generates the search object text.
(10) The information processing apparatus according to any one of (1) to (9), further including:
   a display control unit that performs display control of the detection result detected from the search object text,
   wherein the display control unit performs emphasis display with respect to a location having a sentence structure similar to a sentence structure of the search condition information among the detection result.
(11) An information processing method including:
   acquiring search condition information that is text information indicating search conditions for searching for search object text structured according to a case structure;
   executing language analysis processing with respect to the search condition information;
   extracting a sentence structure of the search condition information using the language analysis result of the search condition information;
   generating a search expression reflecting the sentence structure of the search condition information used to search for the search object text according to the sentence structure of the search condition information; and
   searching for text matching the search conditions from the search object text according to the sentence structure of the search condition information, using the generated search expression.
(12) A program for causing a computer to realize:
   a search condition information acquiring function of acquiring search condition information that is text information indicating search conditions for searching for search object text structured according to a case structure;
   a language processing function of executing language analysis processing with respect to the search condition information;
   a structure extracting function of extracting a sentence structure of the search condition information, using the language analysis result of the search condition information;
   a search expression generating function of generating a search expression reflecting the sentence structure of the search condition information used to search for the search object text according to the sentence structure of the search condition information; and
   a searching function of searching for text matching the search conditions from the search object text according to the sentence structure of the search condition information, using the generated search expression.
(13) An information processing system including:
   an information searching server that includes a search condition information acquiring unit that acquires search condition information that is text information indicating search conditions for searching for search object text structured according to a case structure, a language processing unit that executes language analysis processing with respect to the search condition information, a structure extracting unit that extracts a sentence structure of the search condition information using the language analysis result of the search condition information, a search expression generating unit that generates a search expression reflecting the sentence structure of the search condition information used to search for the search object text according to the sentence structure of the search condition information, and a searching unit that searches for text matching the search conditions from the search object text according to the sentence structure of the search condition information using the generated search expression; and
   a user operation terminal that generates the search condition information and outputs the generated search condition information to the information searching server,
   wherein the information searching server outputs the search result regarding the search condition information output from the user operation terminal to the user operation terminal.

The present disclosure contains subject matter related to that disclosed in Japanese Priority Patent Application JP 2011-105034 filed in the Japan Patent Office on May 10, 2011.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus comprising:
a search condition information acquiring unit that acquires search condition information that is text information indicating search conditions for searching for search object text structured according to a case structure;
a language processing unit that executes language analysis processing with respect to the search condition information;
a structure extracting unit that extracts a sentence structure of the search condition information using the language analysis result of the search condition information;
a search expression generating unit that generates a search expression reflecting the sentence structure of the search condition information used to search for the search object text according to the sentence structure of the search condition information; and
a searching unit that searches for text matching the search conditions from the search object text according to the sentence structure of the search condition information using the generated search expression.

2. The information processing apparatus according to claim 1, wherein, when a plurality of sentences are included in the search condition information, the searching unit searches for text matching transitions of predicate structures from the search object text on the basis of the transitions of the predicate structures of the sentences included in the search condition information.

3. The information processing apparatus according to claim 2,
wherein, on the basis of language code information where a word or a word group is associated with a language code to be unique identification information given to the word or the word group, the word or the word group included in the language code information among the search object text is replaced with the corresponding language code, a case of the word or the word group replaced with the language code in the search object text is associated with the language code, and the predicate structures of the search object text are denoted,
the information processing apparatus further comprises a search object data generating unit that generates search object data used in search processing of the search object text using the language code information, and
the search object data generating unit generates times-series fact data in which the predicate structure corresponding to a sentence including the language code among sentences forming the search object text is accumulated in appearance order of the sentences, and uses text identification information to be unique identification information given to the search object text and sentence identification information to be unique identification information given to the sentences forming the search object text to generate a search index in which the text identification information and the sentence identification information to specify the sentence including the language code are associated with the language code.

4. The information processing apparatus according to claim 3,
wherein the search expression generating unit replaces the word or the word group included in the language code information among the text included in the search condition information with the language code using the language code information and generates the search expression, and
the searching unit searches the search index using the language code included in the search expression and extracts the sentence including the language code included in the search expression as candidate data.

5. The information processing apparatus according to claim 4, further comprising:
a selecting unit that selects text output as the search result from the candidate data extracted by the searching unit,
wherein the selecting unit selects the text output as the search result according to degrees of similarity of sentence structures of the text included in the search condition information and sentence structures of the candidate data.

6. The information processing apparatus according to claim 5, wherein the selecting unit outputs sentences appearing before or after a sentence similar to the search expression among the text selected as the detection result, as the search result.

7. The information processing apparatus according to claim 5, wherein the selecting unit executes statistical analysis with respect to sentences appearing before or after a sentence designated by a user among the text output as the search result or the search condition information or topics corresponding to the language code in each of the sentences forming the search condition information and outputs the obtained statistical analysis result.

8. The information processing apparatus according to claim 7, wherein the selecting unit executes the statistical analysis with respect to sentences in which the language code is included in an object case or a predicate among the sentences appearing before or after the sentence designated by the user or the sentences forming the search condition information.

9. The information processing apparatus according to claim 3, wherein, when the information processing apparatus acquires non-structured text not structured according to a case structure, the image processing apparatus structures the non-structured text on the basis of the language processing result by the language processing unit and the sentence structure extracted by the structure extracting unit and generates the search object text.

10. The information processing apparatus according to claim 1, further comprising:
a display control unit that performs display control of the detection result detected from the search object text,
wherein the display control unit performs emphasis display with respect to a location having a sentence structure similar to a sentence structure of the search condition information among the detection result.

11. An information processing method comprising:
acquiring search condition information that is text information indicating search conditions for searching for search object text structured according to a case structure;
executing language analysis processing with respect to the search condition information;
extracting a sentence structure of the search condition information using the language analysis result of the search condition information;
generating a search expression reflecting the sentence structure of the search condition information used to search for the search object text according to the sentence structure of the search condition information; and
searching for text matching the search conditions from the search object text according to the sentence structure of the search condition information using the generated search expression.

12. A program for causing a computer to realize:
a search condition information acquiring function of acquiring search condition information that is text information indicating search conditions for searching for search object text structured according to a case structure;
a language processing function of executing language analysis processing with respect to the search condition information;
a structure extracting function of extracting a sentence structure of the search condition information using the language analysis result of the search condition information;
a search expression generating function of generating a search expression reflecting the sentence structure of the search condition information used to search for the search object text according to the sentence structure of the search condition information; and
a searching function of searching for text matching the search conditions from the search object text according to the sentence structure of the search condition information using the generated search expression.

13. An information processing system comprising:
an information searching server that includes a search condition information acquiring unit that acquires search condition information that is text information indicating search conditions for searching for search object text structured according to a case structure, a language processing unit that executes language analysis processing with respect to the search condition information, a structure extracting unit that extracts a sentence structure of the search condition information using the language analysis result of the search condition information, a search expression generating unit that generates a search expression reflecting the sentence structure of the search condition information used to search for the search object text according to the sentence structure of the search condition information, and a searching unit that searches for text matching the search conditions from the search object text according to the sentence structure of the search condition information using the generated search expression; and
a user operation terminal that generates the search condition information and outputs the generated search condition information to the information searching server,
wherein the information searching server outputs the search result regarding the search condition information output from the user operation terminal to the user operation terminal.
